# EUROPEAN PATENT APPLICATION

(11) **EP 3 594 875 A1**
(43) Date of publication of application: **15.01.2020**
(21) Application number: 19185895.0
(22) Date of filing: 11.07.2019
(51) Int. Cl.: G06Q 10/08, G06Q 10/06, G06Q 10/04, G06Q 50/16

(54) **SYSTEMS AND METHODS FOR PROVIDING AN ACCESS MANAGEMENT PLATFORM**

(30) Priority: 11.07.2018 US 201862696735 P; 02.07.2019 US 201916460567
(71) Applicant: ACSYS Holdings Limited, Wanchai (HK)
(72) Inventor: MOURADIAN, Jean, Guangdong (CN); GOVIND, Priyesh, 682 308 Kerala (IN)
(74) Representative: Fennell, Gareth Charles

(57) **Abstract**

This disclosure relates to access management systems and platforms that are configured to perform functions associated with controlling access to remote sites and managing maintenance operations at the remote sites. The platform can aggregate data associated with the sites and/or assets located at the sites. The aggregated data can be analyzed to predict asset alert conditions indicating a potential failure or malfunctioning of the assets located at the remote sites. The platform can preemptively schedule maintenance operations to prevent failure or malfunctioning of the assets, and can provide individuals access to the sites to enable performance of the maintenance operations.

## Description

### CROSS-REFERENCE TO RELATED APPLICATIONS

This application claims benefit of, and priority to, U.S. Provisional Application No. 62/696,735 filed on July 11, 2018 and U.S. Non-Provisional Application No. 16460567 filed on July 2, 2019. The content of the above-identified applications are herein incorporated by reference in their entirety.

### TECHNICAL FIELD

The present disclosure is related to access management systems and, more particularly, to techniques for remotely managing access rights to secured sites and assets protected by electronic key and lock systems, and for preemptively detecting alert conditions associated with the secured sites and assets.

### BACKGROUND

Many different sites utilize key and lock systems to provide security at facilities. The key and lock systems may be electronic and/or programmable, and can secure the sites and assets (e.g., generators, electrical sub-stations, phone towers, radio towers, fueling sources/stations, servers, batteries, or various related equipment) located at the sites. From time to time, the assets located at the sites can fail and/or malfunction for various reasons. Typically, such failures or malfunctions are only detected after they have occurred, thus resulting in downtimes and/or inoperability periods for the assets. Even after such failures or malfunctions are detected, the downtimes or inoperability periods are prolonged due to the amount of time required to schedule and perform maintenance on the affected assets. In many cases, additional delays can be attributed to the manner in which service providers (e.g., contractors, vendors, maintenance personnel, or other individuals who service the sites) are granted access to the sites and assets located at the sites.

Therefore, there is a need for improved access management systems that provide efficient and effective tools for managing asset failures or malfunctions, as well as access rights to secured sites protected by key and lock systems.

### BRIEF DESCRIPTION OF DRAWINGS

To facilitate further description of the embodiments, the following drawings are provided, in which like references are intended to refer to like or corresponding parts, and in which:
Figure 1 is a block diagram of an exemplary system in accordance with certain embodiments;
Figure 2 is a block diagram of an exemplary system for providing an access management system in accordance with certain embodiments;
Figure 3 is a diagram illustrating an exemplary architecture for an access management system in accordance with certain embodiments;
Figure 4 is an exemplary interface that may be displayed by the access management system in accordance with certain embodiments;
Figure 5 is an exemplary interface that may be displayed by the access management system in accordance with certain embodiments;
Figure 6 is an exemplary interface that may be displayed by the access management system in accordance with certain embodiments;
Figure 7 is an exemplary interface that may be displayed by the access management system in accordance with certain embodiments;
Figure 8 is an exemplary interface that may be displayed by the access management system in accordance with certain embodiments;
Figure 9 is an exemplary interface that may be displayed by the access management system in accordance with certain embodiments;
Figure 10 is an exemplary interface that may be displayed by the access management system in accordance with certain embodiments;
Figure 11 is an exemplary interface that may be displayed by the access management system in accordance with certain embodiments;
Figure 12 is an exemplary interface that may be displayed by the access management system in accordance with certain embodiments;
Figure 13 is an exemplary interface that may be displayed by the access management system in accordance with certain embodiments;
Figure 14 is an exemplary interface that may be displayed by the access management system in accordance with certain embodiments;
Figure 15 is an exemplary interface that may be displayed by the access management system in accordance with certain embodiments;
Figure 16 is an exemplary interface that may be displayed by the access management system in accordance with certain embodiments;
Figure 17 is an exemplary interface that may be displayed by the access management system in accordance with certain embodiments;
Figure 18 is an exemplary interface that may be displayed by the access management system in accordance with certain embodiments;
Figure 19 is an exemplary interface that may be displayed by the access management system in accordance with certain embodiments;
Figure 20 is an exemplary interface that may be displayed by the access management system in accordance with certain embodiments;
Figure 21 is an exemplary interface that may be displayed by the access management system in accordance with certain embodiments;
Figure 22 is an exemplary interface that may be displayed by the access management system in accordance with certain embodiments;
Figure 23 is an exemplary interface that may be displayed by the access management system in accordance with certain embodiments;
Figure 24 is an exemplary interface that may be displayed by the access management system in accordance with certain embodiments; and
Figure 25 is an exemplary method in accordance with certain embodiments.

### DETAILED DESCRIPTION OF EXEMPLARY EMBODIMENTS

This disclosure relates to systems, methods, apparatuses, and computer program products associated with an access management system that has enhanced features for monitoring and managing access control and maintenance operations relative to assets stored at secured sites. The access management system can be configured to provide individuals with access to one or more remote sites in various ways. The remote sites may represent secured locations such as phone towers, radio towers, fueling sources, refueling stations, warehouses, server farms, fulfillment centers, production facilities, and/or any other facilities or locations that utilize key and lock systems to provide security at the remote sites. Each of the remote sites can include one or more assets including, but not limited to, equipment (e.g., generators, electrical sub-stations, servers, and batteries), access control devices (e.g., electronic locks and programmable keys), manufacturing equipment, storage units, and computing devices (e.g., desktop computers, smart phones, and tablets). The access management system can also be configured to perform various functions for managing maintenance of the assets at the remote sites. In certain embodiments, the maintenance control operations performed by the access management system include functions for preemptively identifying one or more asset alert conditions at the remote sites. The asset alert conditions can include predictions for identifying assets that are likely to fail, malfunction, and/or require maintenance. The access management system can then schedule preventive maintenance operations on the assets identified by the asset alert conditions. In this manner, the access management system is able to take anticipatory measures for preventing damage to the site assets and for eliminating potential downtime of the assets and/or sites.

In certain embodiments, the access management system aggregates data associated with the remote sites, which is utilized by an analytics component to make accurate predictions corresponding to the asset alert conditions. In certain embodiments, the analytics component may be configured to utilize machine learning algorithms, artificial intelligence (Al) algorithms, and/or trained neural networks to make the predictions corresponding to the asset alert conditions. In certain embodiments, the analytics component can analyze the aggregated data to determine patterns associated with prior incidents (e.g., such as prior product failures, malfunctions and/or related issues). For example, the analytics component can perform a detailed analysis of the aggregated data to identify correlations between prior incidents associated with the assets and one or more causation factors. The causation factors may correspond to any factor and/or data point that is associated with an increase in incident occurrences. Exemplary causation factors may be based on over-utilization of the assets (e.g., beyond a threshold period of time and/or above a frequency threshold), frequency of routine maintenance operations on the assets, geographic locations of the assets, weather patterns near locations of the assets, and/or other factors.

The data aggregated by the access management system and utilized to predict the asset alert conditions can include any data associated with the remote sites 160. Examples of such data include product information (e.g., which identifies manufacturers, model types, and/or versions of software utilized by the assets), usage information (e.g., which indicates the extent of use and frequency of use of the assets), maintenance information (e.g., which includes data corresponding to previous maintenance requests associated with the assets), access control information (e.g., which provides data related to prior access that was granted to the assets and/or sites), third-party information (e.g., which can include data gathered from third-party products, services, and/or service providers), site information (e.g., which provides specific details for each site relating to its geographic location, function, and features), weather information (e.g., which provides details on previous weather conditions for each of the sites), and service provider information (e.g., which identifies companies and/or individuals who service the sites and the particular requests handled by such companies and/or individuals). Other types of data may be aggregated by the access management system and/or utilized to predict the asset alert conditions.

In certain embodiments, the analytics component can be configured to perform various functions in addition to predicting asset alert conditions. Other exemplary functions performed by the analytics component may involve analyzing the aggregated data to perform various benchmarking functions. The benchmarking functions may be utilized to determine metrics associated with service requests, maintenance requests, and/or other type of requests. For example, the benchmarking functions may analyze the aggregated data to determine metrics indicating appropriate amounts of time for responding to the requests, appropriate amounts of time for completing each type of request, appropriate costs associated with fulfilling requests, and/or other metrics associated with the requests.

In certain embodiments, the analytics component can also be configured to perform various assessment functions. For example, assessment functions may utilize the metrics generated by the benchmarking functions to evaluate performances of specific individuals (e.g., contractors, employees, and/or staff members), companies, and/or service providers associated the remote sites. Because data collected by the access management system can include granular information about every previous or ongoing maintenance request, the analytics component can evaluate the performance of the individuals (e.g., contractors, employees, and/or staff members), companies, and/or service providers.

The access management system can display interfaces and/or transmit notifications for presenting the information that is generated by the analytics component. The interfaces can be presented to administrators at a network operations center (NOC) associated with the access management system, site operators and managers, site employees, contractors, and/or any other individuals associated with the sites.

The embodiments described in this disclosure can be combined in various ways. Any aspect or feature that is described for one embodiment can be incorporated into any other embodiment mentioned in this disclosure. Moreover, any of the embodiments described herein may be hardware-based, software-based, or preferably comprise a mixture of both hardware and software elements. Thus, while the description herein may describe certain embodiments, features, or components as being implemented in software or hardware, it should be recognized that any embodiment, feature, or component that is described in the present application may be implemented in hardware and/or software.

Embodiments may include a computer program or computer program product accessible from a computer-usable or computer-readable medium providing or comprising program code or instructions for use by or in connection with a computer or any instruction execution system. The program code or instructions can cause the computer or instruction execution system to perform or implement the described methods. A computer-usable or computer-readable medium may include any apparatus that stores, communicates, propagates, or transports the program for use by or in connection with the instruction execution system, apparatus, or device. The medium can be a magnetic, optical, electronic, electromagnetic, infrared, or semiconductor system (or apparatus or device) or a propagation medium. The medium may include a computer-readable storage medium, such as a semiconductor or solid-state memory, magnetic tape, a removable computer diskette, a random access memory (RAM), a read-only memory (ROM), a rigid magnetic disk, an optical disk, etc.

A data processing system suitable for storing and/or executing program code may include at least one processor coupled directly or indirectly to memory elements through a system bus. The memory elements can include local memory employed during actual execution of the program code, bulk storage, and cache memories, which provide temporary storage of at least some program code to reduce the number of times code is retrieved from bulk storage during execution. Input/output or I/O devices (including, but not limited to, keyboards, displays, pointing devices, etc.) may be coupled to the system either directly or through intervening I/O controllers.

Network adapters may also be coupled to the system to enable the data processing system to become coupled to other data processing systems or remote printers or storage devices through intervening private or public networks. Modems, cable modems, and Ethernet cards are just a few of the currently available types of network adapters.

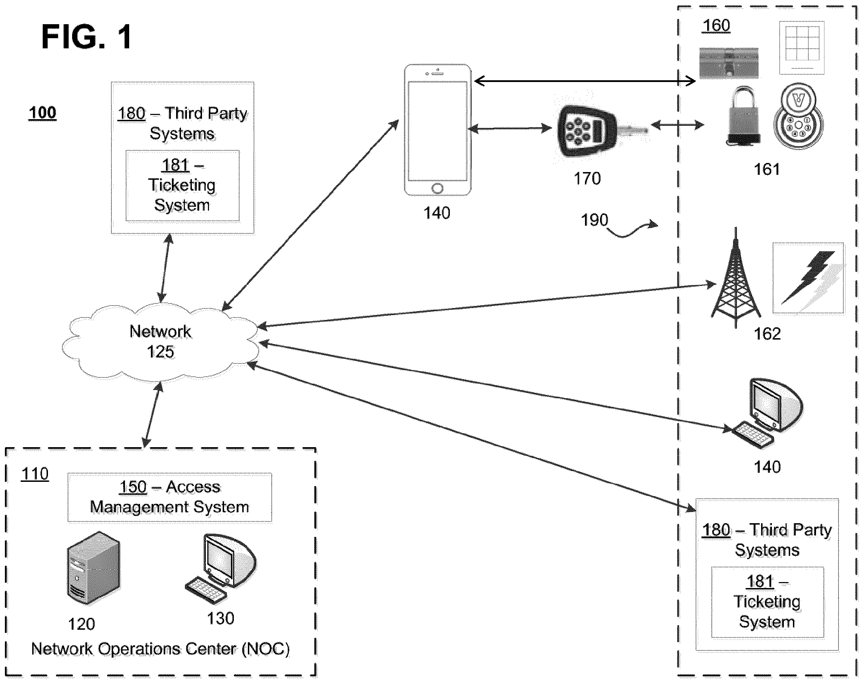

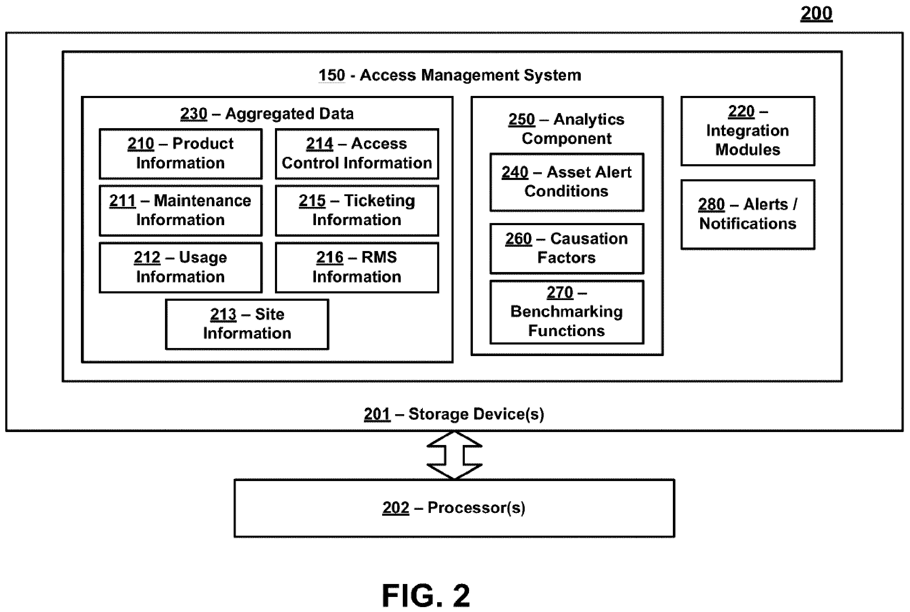

Various aspects of exemplary systems are provided with references to Figures 1 and 2. Figure 1 is a block diagram of an exemplary system 100 in accordance with certain embodiments. The system 100 includes an access management system 150 that is configured to perform functions associated with monitoring and controlling access to sites 160, monitoring and managing maintenance operations at the sites 160, and other related functions described herein. Figure 2 is a block diagram of an exemplary system 200 for providing an access management system 150 in accordance with certain embodiments.

The system 100 in Figure 1 comprises, inter alia, at least one network operations center (NOC) 110 that includes one or more servers 120 and/or one or more administrator devices 130, and an access management system 150. In certain embodiments, the one or more servers 120 and/or one or more administrator devices 130 associated with the network operations center 110 are configured to host the access management system 150. The access management system 150 can additionally, or alternatively, be hosted by one or more computing devices located remotely from the NOC (e.g., in a cloud-based server environment).

The system 100 also includes at least one remote site 160 that comprises one or more electronic locks 161, site equipment 162, and one or more remote site devices 140. The one or more remote site devices 140, which can be mobile in some cases, may also be located external to the remote sites 160. The one or more remote site devices 140 can additionally, or alternatively, be located at the remote sites 160. One or more electronic programmable keys 170 can be utilized to access the remote sites 160 or portions of the remote sites 160. One or more third-party systems 180 can provide various products and/or services for the remote sites 160.

Any of the components illustrated in Figure 1 can communicate with each other over a network 125. For example, the network operations center 110 (including each of the servers 120, administrator devices 130, and access management system 150) is configured to communicate with the remote site devices 140, the remote sites 160 (e.g., servers or computing devices located at the remote site), and the third-party systems 180 over a network 125. The network 125 may be any type of network, such as one that includes the Internet, a local area network, a wide area network, an intranet, a virtual private network, a cellular network, a personal area network, and/or other type of network. In certain embodiments, the network operations center 110 may also be configured to communicate with the electronic programmable keys 170, the electronic locks 161, and the site equipment 162 over the network 125.

Generally speaking, the network operations center 110 provides assistance with controlling access to the sites 160, collecting data associated with the sites 160, and utilizing the collected data to provide enhanced support functions for the remote sites 160. As described in further detail below, the access management system 150 includes an electronic platform that assists the network operations center 110 with performing these and other functions for the remote sites 160. In certain embodiments, the access management system 150 can be accessed via a web portal and/or website associated with the NOC 110. The remote sites 160 may comprise facilities or locations that include phone towers, radio towers, fueling sources, fueling stations, power utilities, batteries, and/or any other facilities or locations that utilize access control systems or security systems. Individuals associated with the network operations center 110 (e.g., administrators, NOC employees, and/or other individuals) can access the access management system 150 using the administrator devices 130. Individuals associated with the remote sites 160 (e.g., service providers, vendors, contractors, site employees, tenants, and/or other individuals) can access the access management system 150 using the remote site devices 140.

In certain embodiments, the network operations center 110 and/or access management system 150 may provide individuals with access to the remote sites 160 by activating and/or configuring the electronic programmable keys 170 to access the remote sites. Each electronic programmable key 170 may include a storage device (e.g., RAM, ROM, PROM, SRAM, etc.), processor (e.g., central processing unit (CPU)), input device (e.g., electronic keypad or touch screen device), and display screen. In certain embodiments, the electronic programmable keys 170 may also include components or devices that are configured to communicate with the electronic locks 161 using near-field communication (NFC), Bluetooth, Wi-Fi, or other communication protocols. The keys 170 may be configured to store data associated with one or more opening codes that will enable the keys to open one or more electronic locks 161, receive opening codes entered via an input device on the keys 170, activate the keys 170 in response to determining that a received opening code is valid, unlock one or more electronic locks 161 when the keys 170 are activated and engaged with the one or more electronic locks 161, download access logs from the one or more electronic locks 161, and perform other related functions. The keys 170 may be activated to open one or more of the electronic locks 161 located at the remote sites 160 by programming the key 170 with appropriate access permissions at the NOC 110 and/or by transmitting an opening code to an individual in possession of the key 170 in order to provide the individual with real-time access while operating in the field. In certain embodiments, the keys 170 may also include mobile devices (e.g., smart phones) that have installed applications configured to wirelessly communicate with electronic locks 161 (e.g., using any of the aforementioned protocols) to open or secure the electronic locks 161.

The electronic locks 161 located at the remote sites 160 can generally represent any lock that includes electrical wiring or electrical components, and/or any lock that is capable of connecting to a network 125. The configuration of the electronic locks 161 can vary greatly. In certain embodiments, the electronic locks 161 may include mechatronic cylinder locks and/or padlocks. In certain embodiments, some of the electronic locks 161 may include a storage device, a processor, and one or more components for communicating with electronic keys 170. The electronic locks 161 may be unlocked in response to being engaged by an electronic key 170 that has been activated by a valid opening code during a specified timeframe in which access is granted to an individual. The electronic locks 161 can be locked/unlocked in other ways as well. For example, in certain embodiments, the electronic locks 161 located at the remote sites 160 may additionally, or alternatively, be opened using a keypad or other input device that is included on, or in communication with, the electronic locks 161 (e.g., by entering an appropriate passcode and/or by providing other inputs). In certain embodiments, the passcode may be a dynamic passcode generated by a Code Generation System (CGS). A dynamic passcode may represent a unique, single-use, time-limited or one-time passcode that is generated by the network operations center 110 (e.g., by server 120 or administrator device 130) upon request. The passcode may be based in part on the time the passcode was requested. In certain embodiments, the access management system 150 is also configured to remotely lock and/unlock the electronic locks 161 by transmitting commands to the electronic locks 161 over the network 125. In certain embodiments, some of the locks at the remotes sites 160 may include purely mechatronic locks. In certain embodiments, some of the electronic locks 161 may include keyless locks (e.g., keyless padlocks, keyless cylinder locks, etc.). In certain embodiments, the access management system 150 can transmit commands to the keyless electronic locks 161 (e.g., using Bluetooth or other wireless protocols) to lock/unlock the electronic locks 161. In certain embodiments, mobile devices (e.g., smart phones) may have installed applications configured to wirelessly communicate with the keyless electronic locks 161 (and/or other electronic locks 161) to lock/unlock the electronic locks 161.

The storage device associated with the electronic lock 161 may store an access log, which includes information related to entry attempts. For example, each time an electronic lock 161 is engaged by a key 170, the access logs may be updated to include an entry that identifies the lock 161 and key 170 (e.g., using unique identifiers), the time that the entry attempt occurred, one or more individuals associated with key 170, and data that indicates whether or not the entry attempt was successful. The electronic lock 161 may also include communication devices for transferring the access logs to electronic keys 170 (e.g., using a direct electrical connection, radio frequency identification (RFID), or NFC protocols) and/or to remote site devices 140.

The access management system 150 can be configured to perform any and all functions discussed herein with respect to controlling access to the sites 160 (e.g., with respect to controlling access to electronic locks 161 and equipment 162 at the sites 160). For example, in certain embodiments, it may be desired to provide individuals (e.g., staff members and contractors) with access to one or more of the remote sites 160 in order to perform maintenance, check on security issues, and/or for other reasons. The access management system 150 is able to provide, revoke, restrict, and/or otherwise control access to the remote sites 160 in a various ways.

For example, as explained above, the access management system 150 can facilitate access to the sites 160 using the programmable keys 170. In some cases, this may involve distributing opening codes to the remote site devices 140 (e.g., which may include mobile devices associated with contractors or other individuals operating in the field) that enable the electronic programmable keys 170 to access the remote sites 160 or to access certain areas of the sites 160 in real time. In some cases, this may involve entering the codes into keypads included on the electronic programmable keys 170 in order to activate the electronic programmable keys 170 and to configure the keys 170 with appropriate permissions for unlocking one or more of the electronic locks 161 located at the sites 160. The access management system 150 can also transmit commands over the network for remotely unlocking and/or locking the electronic locks 161. The access management system 150 can provide access to the sites 160 in other ways as well.

The access management system 150 can also be configured to perform any and all functions described herein with respect to collecting, aggregating, and/or storing data associated with the sites 160. For example, the access management system 150 can be configured to collect, store, and aggregate data associated with site assets 190 including, but not limited to, the electronic locks 161 located at the sites 160, equipment 162 located at the sites 160, remote site devices 140 (e.g., which may be located by the sites 160 and/or external to the sites 160), third-party systems 180 utilized by the sites 160, programmable keys 170 utilized to access the sites 160 or portions of the sites 160, and/or any other assets 190 associated with the sites 160. As described in further detail below, the data aggregated by the access management system 150 can be analyzed to perform a variety of useful functions such as predicting failures (e.g., hardware and/or software failures of the electronic locks 161, equipment 162, and/or remote site devices 140 located at the sites 160), preemptively scheduling maintenance operations, establishing benchmark metrics related to the performance of various activities, assessing productivity and efficiency levels of individuals (e.g., such as contractors and/or employees servicing the sites), and/or other useful functions. Alerts relating to these functions can be presented on interfaces that are accessible via the access management system 150.

As demonstrated by Figure 2, various types of data can be collected and stored by the access management system 150 related to the site assets 190 (e.g., such as the electronic locks 161, equipment 162, third-party systems 180, remote site devices 140, programmable keys 170, and/or any other assets). For example, in certain embodiments, the access management system 150 collects and stores product information 210 for assets 190, which identifies manufacturers, model types, versions of software, and other types of related information for the assets.

The access management system 150 can also collect and store maintenance information 211 associated with each of the assets 190. The maintenance information 211 may generally include any information associated with prior, ongoing, and/or upcoming maintenance requests. Exemplary maintenance information 211 that can be collected may include data indicating and/or identifying: previous errors, problems, and/or issues that have been reported in connection with the assets 190; times and dates of when maintenance was previously performed on the assets 190; the type of maintenance that was performed on the assets 190; specific individuals and/or companies that performed the maintenance on the assets 190; frequency at which routine maintenance is scheduled for the assets 190; any software and/or hardware upgrades applied to the assets 190; and/or other related information. The maintenance information 211 can be collected directly by the access management system 150 and/or can be retrieved from one or more third-party systems 180 (e.g., one or more third party ticketing systems 181).

The access management system 150 can further be configured to collect and store usage information 212 for the assets associated with the sites 160. The usage information 212 may generally include any information that indicates the extent to which the assets 190 have been in use and details related to such use. Exemplary usage information 212 that can be collected may include data indicating and/or identifying: a duration of use for each of the assets 190 (e.g., indicating how long hardware and/or software associated with each asset has been in use); the extent to which each of the assets 190 has been used (e.g., how frequently the programmable keys 170 were utilized to engage locks, how frequently electronic locks 161 were engaged by keys, and/or how frequently the equipment 162 was accessed and/or activated); how frequently individuals were granted access to the site assets 190; and/or other related information.

The access management system 150 can also collect and store site information 213 associated with each of the sites 160. The site information 213 can generally include any information about the sites 160 themselves. Exemplary site information 213 that can be collected may include data indicating and/or identifying: the geographic location of the site; the number of individuals (e.g., employees, contractors and/or staff) located at each site; the altitudes of the sites; third-party systems 180 utilized by the sites; and/or other related information.

The access management system 150 can also collect and store access control information 214 associated with each of the sites 160. The access control information 214 can generally include any data related to controlling access to the sites 160 and/or site assets 190. In certain embodiments, the access control information 214 may be obtained, at least in part, from access logs that are retrieved from the electronic locks 161, programmable keys 170, and/or remote site devices 140 associated with the sites 160. Exemplary access control information 214 that can be collected may include data indicating and/or identifying: whether or not the entry attempts were successful; dates and times of entry attempts; identifiers associated with the electronic locks 161; identifiers associated with the electronic programmable keys 170; the electronic locks 161 and programmable keys 170 that are associated with each entry attempt; data that correlates specific individuals with the programmable keys 170 and/or entry attempts; GPS coordinates identifying locations of entry attempts; and/or other related data.

The access management system 150 can also collect and store information associated with one or more third-party systems 180. The third-party systems 180 may be systems developed by or used at the sites 160 (e.g., proprietary software developed for the sites 160) and/or may be systems offered by external third-party entities (e.g., third party service providers). Some of the third-party systems 180 can correspond to products and/or services used by the sites 160 (e.g., which provide ticketing services and/or software). The third-party systems 180 can also include entities that accumulate data relevant to the sites (e.g., which maintain databases that include historical information indicating weather conditions near the remote sites, traffic conditions near the remote sites, and other types of historical information). The third-party systems 180 can include computing devices (e.g., which are the same as or similar to servers 120, administrator devices 130 and/or remote site devices 140) that are utilized to provide the products and/or services to the sites 160, and/or which store data associated with the products and/or services provided to the sites 160. The access management system 150 can include one or more integration modules 220 that are configured to retrieve, collect, and/or store data from the third-party systems 180. The integration modules 220 can include application programming interfaces (APIs) that enable data to be retrieved from the third-party systems 180.

One exemplary third-party system 180 may include a ticketing system 181. The ticketing system 181 can provide a platform for managing "ticketing" operations associated with servicing the sites 160, controlling access to the sites 160, performing maintenance at the sites 160, and/or other related functions. For example, the ticketing system 181 can store ticketing information 215 or data associated with previous and/or current requests to perform maintenance at the sites 160 (e.g., with respect to maintenance performed on the electronic locks 161, programmable keys 170, and/or remote site devices 140). The ticketing information 215 or data may indicate the specific individuals (e.g., contractors) who performed the maintenance, the specific assets that were the subject of the maintenance requests, times/dates associated with the maintenance requests, an amount of time expended to complete the maintenance requests, costs associated with performing the maintenance requests, and/or other related information. As mentioned above, the access management system 150 can include integration modules 220 that enable the access management system 150 to retrieve, collect, and/or store any ticketing information 215 or data from the ticketing system 181.

The access management system 150 can include integration modules 220 that are configured to retrieve, collect, and/or store information and data from other types of third-party systems 180. Other examples of third-party systems 180 may include systems that are associated with providing and/or maintaining the electronic locks 161 and programmable keys 170, and which store related data (e.g., access logs, maintenance information, software/hardware upgrades, and/or other data). Additional examples of third-party systems 180 may include enterprise resource planning (ERP) systems, material requirements planning (MRP) systems, remote monitoring systems (RMS), weather collection systems, service provide systems (e.g., associated with contractors or companies that provide services for the sites 160), and/or the like. The access management system 150 can also include integration modules 220 for collecting data from other types of third-party systems 180 that are not explicitly mentioned in this disclosure.

In certain embodiments, the integration modules 220 can permit integration with at least one RMS that allows for monitoring and controlling of site assets 190 (e.g., such as base transceiver stations and/or other assets) located at one or more of the remote sites 160. The RMS can collect various types of RMS information 216 and data associated with the assets. For example, an RMS may be configured to record power consumption data, detect device failures, measure fuel consumption, regulate device temperatures (e.g., by controlling air conditioning units), and/or perform other related functions. In certain embodiments all of the RMS information 216 and data collected by the RMS may be transmitted to, and/or retrieved by, the access management system 150 over a network 125 (e.g., over a 3G or 4G connection). As explained herein, the access management system 150 can utilize the RMS information 216 or data collected by the RMS to schedule preventive maintenance operations and/or to perform other useful functions.

In view of the foregoing, the access management system 150 can be configured to collect, store and aggregate various types of data and information including, but not limited to, the product information 210, maintenance information 211, usage information 212, site information 213, access control information 214, ticketing information 215, RMS information 216, and third-party information (e.g., including ERP information, MRP information, ticketing information, and other information obtained from third-party systems) described above. It should be understood that the access management system may be configured to gather other types of information other than the specific types of information mentioned above. In certain embodiments, some or all of this information can be retrieved and/or received by the access management system 150 over the network 125. The information may be input via various interfaces provided by the access management system 150 and/or may be collected from databases associated with the remote sites 160 and assets 190.

Any of the aforementioned information or other information collected by the access management system 150 can be stored as aggregated data 230. The access management system 150 includes an analytics component 250 that utilizes the aggregated data 230 to perform various functions. One particularly useful function performed by the analytics component 250 relates to predicting asset alert conditions 240 associated with the assets 190 at the sites 160. Generally speaking, the asset alert conditions 240 may relate to occurrences of incidents or problems associated with the assets 190 located at the remote sites 160. For example, the asset alert conditions 240 may include situations involving a software and/or hardware failure for an asset, situations in which an asset is malfunctioning, and/or situations in which an asset may require maintenance. The analytics component 250 may be configured to predict asset alert conditions 240 for the assets located at the remote sites 160. As explained in further detail below, these predictions may be based, at least in part, on an analysis of the aggregated data 230 (or a portion thereof) collected by the access management system 150 that identifies prior occurrences of asset alert conditions 240 (e.g., prior incidents involving malfunctions and/or failures of software and/or hardware).

The configuration and implementation of the analytics component 250 can vary. In certain embodiments, the analytics component 250 may be configured to utilize machine learning techniques, artificial intelligence techniques (Al), and/or neural networks to make the predictions corresponding to the asset alert conditions 240. For example, the analytics component 250 can be subjected to a training phase during which machine learning techniques, artificial intelligence techniques (Al), and/or neural networks are used to train the analytics component 250 to identify correlations in the aggregated data 230 that are indicative of occurrences of previous asset alert conditions 240 and/or related to increased frequencies of incidents associated with the previous asset alert conditions 240. Once trained, the analytics component 250 can then be configured to predict future occurrences of asset alert conditions 240 for the remote sites 160. The analytics component 250 can additionally, or alternatively, utilize a rule-based analysis function to analyze the aggregated data 230 and to predict occurrences of asset alert conditions 240.

The manner in which these predictions are generated by the analytics component 250 can vary. In certain embodiments, the analytics component 250 may analyze the aggregated data 230 (e.g., including previously collected production information 210, maintenance information 211, usage information 212, site information 213, access control information 214, ticketing information 215, RMS information 216, and/or third-party system information) to identify and categorize previous occurrences of asset alert conditions 240, including previous occurrences of maintenance requests and/or failures for each of the site assets 190 (e.g., including the electronic locks 161, equipment 162, and/or remote site devices 140). The analytics component 250 can then analyze the aggregated data 230 to determine patterns in such occurrences. This may involve analyzing the data to identify one or more causation factors 260 associated with increased occurrences of the asset alert conditions 240. The causation factors 260 identified by the analytics component 250 can correspond to any data points (e.g., hours of asset usage, weather conditions during previous occurrences, and/or specific geographic areas) that are correlated to increases in such occurrences. Based on this analysis, the analytics component 250 can then utilize the identified data points associated with the causation factors 260 to identify the site assets 190 that are at risk and/or will be at risk in the near future.

Below is non-exhaustive description of examples demonstrating how the analytics component 250 can identify causation factors 260 and utilize the causation factors 260 to predict asset alert conditions 240.

Example #1: An analysis of the aggregated data 230 by the analytics component 250 may determine that certain assets 190 will fail, or have a higher likelihood of failing, if the assets do not receive routine maintenance at specified time intervals or within a specified time period since a previous maintenance operation. This exemplary causation factor 260 may be determined on a separate basis for each particular asset 190 (e.g., for each model type, manufacturer, and/or version). For each asset 190, this exemplary causation factor 260 may be identified based, at least in part, on an analysis of the maintenance information 211, ticketing information 215, product information 210, and/or site information 213 collected by the access management system 150. The analytics component 250 can monitor the dates and times that each of the assets were last serviced, and alerts 280 can be sent to preemptively schedule maintenance operations before the specified time periods or intervals have expired or lapsed.

Example #2: An analysis of the aggregated data 230 by the analytics component 250 may determine that certain assets 190 will fail, or have a higher likelihood of failing, if the assets 190 do not receive maintenance after certain threshold usage levels (e.g., indicating the duration and/or frequency of asset usage). This exemplary causation factor 260 may be determined on a separate basis for each particular asset 190 (e.g., for each model type, manufacturer, and/or version). For each asset 190, this exemplary causation factor 260 may be determined based, at least in part, on an analysis of the usage information 212, RMS information 216, site information 213, and/or product information 210 collected by the access management system 150. The analytics component 250 can monitor the current or real-time usage of each asset 190, and alerts 280 can be sent to preemptively schedule maintenance operations before the threshold usage levels have been reached.

Example #3: An analysis of the aggregated data 230 by the analytics component 250 may determine that certain assets 190 will fail, or have a higher likelihood of failing, if the assets 190 are exposed to certain weather conditions. This may indicate that maintenance operations should be performed more frequently when the weather conditions exist (e.g., during certain seasons). This exemplary causation factor 260 may be determined on a separate basis for each particular asset 190 (e.g., for each model type, manufacturer, and/or version). For each asset 190, this exemplary causation factor 260 may be determined based, at least in part, on an analysis of the weather information, maintenance information 211, ticketing information 215, product information 210, and/or site information 213 collected by the access management system 150. The analytics component 250 can monitor the weather patterns at the sites 160 where the assets 190 are located, as well as the dates and times that each of the assets were last serviced. Alerts 280 can be sent to preemptively schedule maintenance operations in the event that certain weather conditions are detected in locations nears the assets.

Example #4: An analysis of the aggregated data 230 by the analytics component 250 may determine that certain assets 190 will fail, or have a higher likelihood of failing, if the assets 190 are located in certain geographic locations and maintenance operations are not routinely performed on the assets within certain intervals. This exemplary causation factor 260 may be determined on a separate basis for each particular asset 190 (e.g., for each model type, manufacturer, and/or version). For each asset 190, this exemplary causation factor 260 may be determined based, at least in part, on an analysis of the maintenance information 211, ticketing information 215, product information 210, and/or site information 213 (e.g., which may indicate the altitudes and geographic locations where the assets are located) collected by the access management system 150. The analytics component 250 can monitor the dates and times that each of the assets 190 were last serviced and the locations of the assets. Alerts 280 can be sent to preemptively schedule maintenance operations if the timeframes or periodic intervals are set to expire in the near future, and maintenance operations have not yet been performed on the assets.

The above examples are not intended to be limiting. It would be evident to one of ordinary skill in the art that the analytics component 250 can be configured to identify many other causation factors 260 based on an analysis of the aggregated data 230, and can predict asset alert conditions 240 in many other scenarios.

Based on the predictions made by the analytics component 250, the access management system 150 can take actions for preemptively scheduling maintenance operations to prevent failures and/or other problematic issues from occurring. Performing such preventive maintenance is advantageous because doing so can prevent damage to the site components and eliminate potential downtime of the components and/or remote sites 160 that rely on the assets 190. The preventive maintenance tasks can be scheduled automatically by the platform 150 (e.g., by automatically requesting and/or assigning contractors to handle the tasks) and/or can be scheduled by individuals using the platform 150.

The access management system 150 can provide alerts 280 and/or notifications to inform various individuals of the predictions made by the analytics components. For example, alerts 280 can be provided to site operators or managers, NOC administrators, maintenance personnel, contractors who service the sites, employees located at the affected sites, and/or other individuals. The alerts 280 can include information that identifies the specific site that may be affected, the specific asset 190 that may be affected at the site, the type of problem or failure that is predicted, recommended time frames for remedying the issue, names and contact information of contractors or other individuals who can attend to the issue, and/or other related information. The alerts 280 can also include selectable options that enable maintenance operations to be instantly scheduled for the affected site assets.

The manner in which the alerts 280 are presented can vary. As discussed in further detail below, the alerts 280 may be presented on interfaces provided by the access management system 150. For example, an individual (e.g., NOC administrator, site operator, service provider, and/or contactor) can access an account on the access management system 150 that displays alerts 280 on an interface for scheduling and managing preventive maintenance operations (e.g., based on predictions made by the analytics component 250), routine maintenance operations, emergency maintenance operations (e.g., in the event an incident or failure has been detected), and/or other types of maintenance operations at one or more sites 160. The alerts 280 can additionally, or alternatively, be transmitted to one or more predetermined individuals by e-mail, text message, phone call, and/or in other ways.

In certain embodiments, the analytics component 250 can be configured to perform benchmarking functions 270. The benchmarking functions 270 can be configured to determine metrics associated with maintenance requests, service requests (e.g., such as security requests), and/or other types of requests that are issued in connection with the remote sites 160. For each type of request, the benchmarking functions 270 can analyze the aggregated data 230 to determine a set of metrics to be used as benchmarks for the requests. For example, the set of metrics generated for a particular request may include data that indicates an appropriate amount of time for responding to the request (e.g., for confirming the request will be handled and/or arriving at the location of the remote site 160 to handle the request), an appropriate amount of time for completing the request, appropriate costs or expenses associated with fulfilling requests (e.g., to determine whether invoices for such services are appropriate), and/or other metrics associated with requests. The metrics may identify specific amounts of time, threshold levels, and/or ranges associated with each of these metrics.

The manner in which the metrics are produced by the benchmarking functions 270 can vary. In certain embodiments, the metrics can be produced by segregating data corresponding to each request type, and separately analyzing the segregated data to determine appropriate metrics for each request type. In certain embodiments, the analytics component 250 can retrieve data from a ticketing system to obtain data that shows when each request was started and completed (e.g., by analyzing which tickets were open and closed), and can retrieve access logs indicating when service providers arrived at remote sites, and engaged the electronic locks. The retrieved information can then be used to determine average or appropriate time periods for completing certain activities.

In certain embodiments, the analytics component 250 can also be configured to utilize the metrics generated by the benchmarking functions 270 to evaluate performances of specific individuals (e.g., contractors, employees, and/or staff members), companies, and/or service providers associated with the remote sites. For example, the analytics component 250 can retrieve data that has been collected in connection with a previous request or ongoing request to determine whether the request (or aspects of the request) is completed in a timely fashion based on the metric benchmarks. The analytics component 250 can also utilize the metric benchmarks to determine whether appropriate invoices were issued by the individuals, companies, and/or service providers who handled the requests.

It should be understood that the analytics component 250 can utilize the data aggregated by the access management system 150 for purposes other than those specifically mentioned in this disclosure.

As shown in Figure 2, the access management system 150 can be stored on one or more storage devices 201 that are in communication with one or more processors 202. The one or more storage devices 201 can include: i) non-volatile memory, such as, for example, read only memory (ROM) or programmable read only memory (PROM); and/or (ii) volatile memory, such as, for example, random access memory (RAM), dynamic RAM (DRAM), static RAM (SRAM), etc. In these or other embodiments, storage devices 201 can comprise (i) non-transitory memory and/or (ii) transitory memory. The one or more processors 202 can include one or more central processing units (CPUs), graphical processing units (GPUs), controllers, microprocessors, digital signal processors, and/or computational circuits. The one or more storage devices 201 can store data and instructions associated with the integration modules 220, aggregated data 230, analytics component 250, alerts 280, and/or other components. The one or more processors 202 are configured to execute instructions associated with these components. Each of these components is described in further detail below.

Any data and information (e.g., the aggregated data 230, asset alert conditions 240, causation factors 260, benchmarks established by the benchmarking functions 270, and alerts 280) described in this disclosure may be stored in one or more databases. The access management system 150 can be configured to maintain the one or more databases, and/or may be configured to access the one or more databases (e.g., over a network 125).

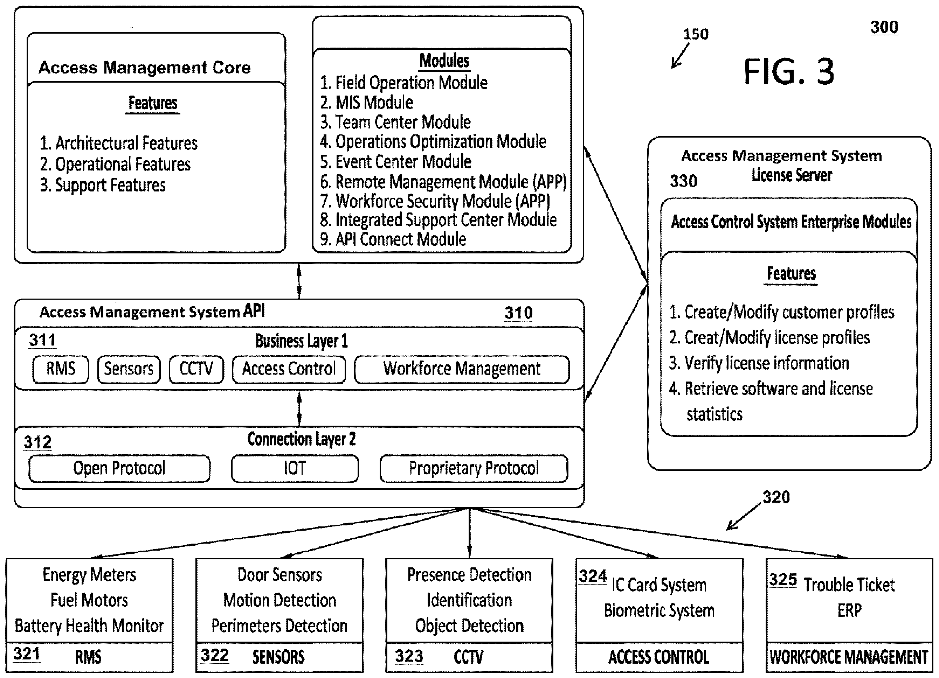

Figure 3 is block diagram illustrating an exemplary architecture 300 for an access management system 150 according to certain embodiments.

The access management system 150 can include, access, and/or utilize an integration layer 310 that enables communication between the access management system 150 and one or more data generating systems 320. Exemplary data generating systems 320 can include one or more RMSs 321 (e.g., which are configured to monitor energy meters, fuel meters, battery health, and other asset metrics), one or more security sensor systems 322 (e.g., which may include door sensors, motion sensors, perimeter detection sensors, and/or other sensors that are configured to generate alerts upon detection of individuals and/or moving objects), one or more camera systems 323 (e.g., which may be configured to perform facial recognition/identification functions and to detect individuals and/or objects), one or more access systems 324 (e.g., which may include, and may be configured to gather data from, electronic locks 161, electronic programmable keys 170, card access devices, biometric access devices, and other types of access control devices), and/or one or more workforce management systems 325 (e.g., which may be configured to manage and gather maintenance information 211 and/or ticketing information 215). The integration layer 310 can enable the access management system 150 to gather any information generated or collected by these data generating systems 320 and the sub-components (e.g., sensors, cameras, etc.) associated with such systems. In certain embodiments, the integration layer 310 can further enable the access management system 150 to control the functionalities of the data generating systems 320 and their sub-components.

The integration layer 310 includes a connection layer 311 and a business layer 312. The connection layer 311 can enable communication between the access management system 150 and the data generating systems 320 (e.g., RMSs 321, security sensor systems 322, etc.) using various protocols, thus permitting wide-ranging data to be collected by the access management system 150. Any protocol can be utilized to facilitate connections with the data generating systems 320 and/or sub-components associated with the data generating systems 320. Exemplary protocols can include open protocols, proprietary protocols, Internet-of-Things (loT) protocols, LAN/WAN protocols, cellular protocols, and/or other protocols. The business layer 312 may include software, code, and/or logic for managing the integration of the data generating systems 320, and for controlling how the data gathered from the data generating systems 320 is provided to, and processed by, the access management system 150.

The access management system 150 may store and execute instructions for various modules including, but not limited to, the modules described below.
- Field Operations Module: This module includes functions for monitoring and controlling access to the sites and assets located at the sites. Access can be remotely monitored and controlled for site tenants, service providers who perform maintenance at the sites 160, and/or other individuals.
- Management Information System (MIS) Module: This module includes functions for displaying real-time status information associated with the sites, assets, service providers, and ongoing maintenance operations. This module can also display historical information associated with the sites, assets, service providers, and previous maintenance operations. The real-time and historical information may be displayed using charts, graphs, maps, etc. This module may be configured to generate and display the MIS and GIS dashboards described below.
- Team Center Module: This module includes functions that provide productivity tools to accelerate operations concerning monitoring and reviewing information. It can enable sharing and communication of data (e.g., using real-time messaging) to various users (e.g., platform administrators, site managers, service providers, etc.). This module also may be configured to provide and generate the clipboard feature described below.
- Operations Optimization Module: This module includes functions that record real-time geographic data about users' activities (e.g., real-time monitoring of service providers' locations and maintenance activities). This module includes functions for assigning service providers to maintenance operations (e.g., in response to detecting asset alert conditions 240). In certain embodiments, in response to detecting an asset alert condition 240 at a site 160, this module may be configured to locate and assign the closest service provider to handle the incident and/or to carry out maintenance at the site 160.
- Event Center Module: This module includes functions that enable real-time monitoring of user activities (e.g., service provider maintenance activities) and assets 190 located at the sites. The module can automatically assign priorities to each of the maintenance requests based on their urgency. The module also includes selectable options that enable individuals to escalate the priorities assigned to the maintenance requests, which may cause alerts 280 to be transmitted to operation centers, team leaders, site managers, and/or other individuals.
- Remote Management Module: This module includes functions that provide an offsite administrative mobile management portal. It includes tools for managing emergencies and access policies at the sites 160, as well as tools that enable real-time monitoring of users (e.g., service providers), assets, and maintenance activities.
- Workforce Security Module: This module provides enhanced asset access authorization with workforce security using geo-location and time-stamps functions. This module enables a service provider or other individual to capture photos indicating completion of an assigned maintenance request, thereby recording information that can be utilized for auditing the maintenance request.
- Integrated Support Center Module: This module includes functions for creating and tracking support tickets related to maintenance requests, and can enable communication with a customer support team using the live voice and/or video communications.
- API Connect Module: This module includes functions for providing an integration interface for adding hardware and software connections (e.g., such as additional data generating systems 320 and hardware components associated with the data generating systems 320).

The architectural and operational features included in the access management system 150 also comprise functions, data, and settings that define the types of electronic programmable keys 170 and electronic locks 161 that are integrated into the system, as well as the authorization technologies (e.g., CGS technologies) that can be utilized. The support features provide functions for communicating with a customer support team.

In certain embodiments, each customer that desires to access and/or utilize the access management system 150 can customize features to be included in a license agreement with a provider of the access management system 150. Regardless of whether the access management system 150 is hosted remotely by the provider (e.g., via a server-based or cloud-based platform) or locally by devices 140 (e.g., servers and/or computing devices) located at the sites 160, a licensing server 330 can be in communication with the access management system 150 to ensure that all options included in the license agreement are provided to the customer.

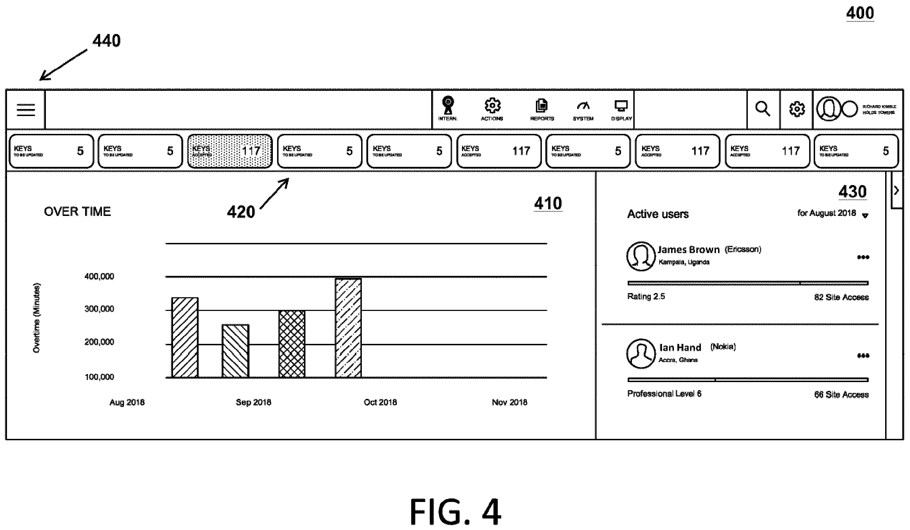

Figure 4 is an exemplary interface 400 that may be displayed by the access management system 150 according to certain embodiments. The interface includes various software features and tools with real-time functionalities. A body portion 410 of the interface includes an MIS dashboard that is configured to display various real-time statistics associated with the sites, assets, maintenance operations, and/or service providers (e.g., vendors, contractors, maintenance personnel, etc.). The body portion 410 may be updated in response to selections of options included on the interface 400.

An alert section 420 includes a movable or slidable portion that is updated in real time to display alerts 280 corresponding to asset alert conditions 240, maintenance events, security events, access control events, and other types of related notifications. The alert section 420 consolidates all abnormalities, asset alert conditions, incidents, and notifications associated with the sites 160. The alert section 420 can enable an administrator or other individual to quickly identify the most critical issues at the sites 160 requiring urgent and immediate action. Each of the alerts 280 can be selected in order to view detailed information about a corresponding alert 280 and to execute functions for managing the alert 280.

A clipboard section 430 enables individuals utilizing the access management system 150 to share various types of data and information. For example, users can utilize the clipboard section 430 to share screenshots, documents being created, and reports. In certain embodiments, any content posted to the clipboard section 430 is automatically deleted after a predetermined period of time (e.g., 7 or 10 days).

A menu option 440 located on the top left of the interface may be selected to view an expandable menu. In certain embodiments, the expandable menu can include one or more of the following menu options:
Sites Option: Selecting this menu option may update the body portion 410 of the interface to display information relating to the sites 160 that are being managed by the access management system 150, assets 190 located at each of the sites 160, and tenants associated with each of the sites 160. A user can update (e.g., add, remove, and edit) the listing of sites 160, assets 190, and tenants.
Actions Option: Selecting this menu option may update the body portion 410 of the interface to display options for controlling access to the sites 160 and/or assets 190. For example, the options may permit a user to add or remove access control permissions for various individuals (e.g., service providers and/or tenants), request programmable keys 170 to be issued or returned, blacklist programmable keys 170 (e.g., thereby preventing the keys from accessing any site 160 and/or asset), manage maintenance requests, and/or perform other related functions.
Reports Option: Selecting this menu option may update the body portion 410 of the interface to display options for generating various reports and transmitting those reports to various individuals.
System Option: Selecting this menu option may update the body portion 410 of the interface to display options for defining and managing users (e.g., administrators, service providers, tenants, etc.), programmable keys 170, electronic locks 161, utilities located at the sites, etc.
Display Option: Selecting this menu option may update the body portion 410 of the interface to toggle between different views, e.g., such as an MIS view, a geographical information system (GIS) view, and a NOC view.
MIS Option: Selecting this menu option may update the body portion 410 of the interface to display information and options relating to any of the functions performed by the MIS module described herein. For example, a user may access an MIS or GIS dashboard that provides real-time information for one or more sites 160. Fact sheet information, which provides a detailed summary of the site assets 190, the tenants, and the maintenance operations, will also be available for each site 160.
Field Operations Option: Selecting this menu option may update the body portion 410 of the interface to display information and options relating to any of the functions performed by the Field Operations module described herein. For example, a user can access functions for controlling access to the sites 160 and assets 190 located at the sites 160, and functions for remotely monitoring the site tenants and the service providers who perform maintenance at the sites 160.
Operations Optimization Option: Selecting this menu option may update the body portion 410 of the interface to display information and options relating to any of the functions performed by the Operations Optimization module described herein (e.g., assigning service providers to maintenance operations).
Workforce Security Option: Selecting this menu option may update the body portion 410 of the interface to display information and options relating to any of the functions performed by the Workforce Security module described herein (e.g., enabling a service provider or other individual to capture photos, information, and data indicating completion of an assigned maintenance request).
Remote Management Option: Selecting this menu option may update the body portion 410 of the interface to display information and options relating to any of the functions performed by the Remote Management module described herein (e.g., providing an offsite administrative mobile management portal that includes tools for managing emergencies and accessing policies at the sites, as well as tools that enable real-time monitoring of users, assets, and maintenance activities).
Team Center Option: Selecting this menu option may update the body portion 410 of the interface to display information and options relating to any of the functions performed by the Team Center module described herein (e.g., sharing and communicating data across various users).
Event Center Option: Selecting this menu option may update the body portion 410 of the interface to display information and options relating to any of the functions performed by the Event Center module described herein (e.g., enabling real-time monitoring of user activities, assigning priorities to each of the maintenance requests based on their urgency, and escalating the priorities assigned to the maintenance requests).
Support Center Option: Selecting this menu option may update the body portion 410 of the interface to display information and options relating to any of the functions performed by the Support Center module described herein (e.g., creating and tracking support tickets related to maintenance requests, and enabling communication with a customer support team).

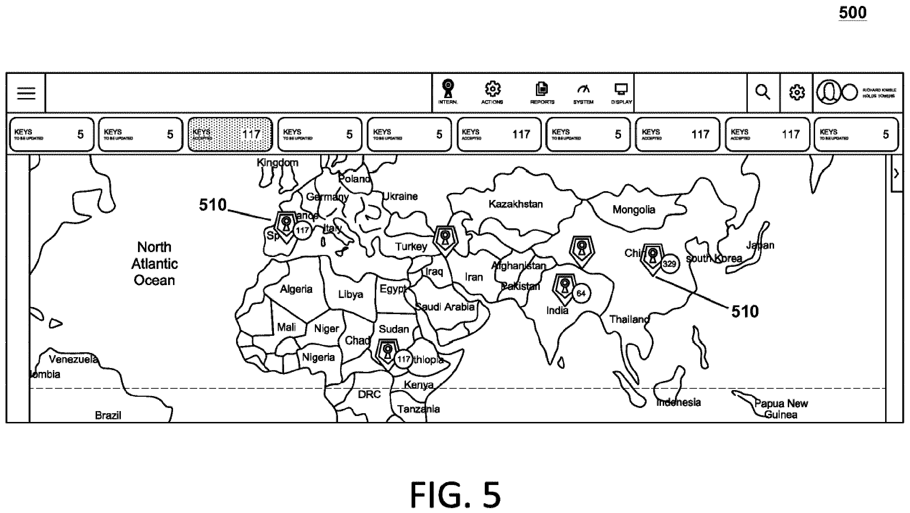

Figure 5 is an exemplary interface 500 that may be displayed by the access management system 150 according to certain embodiments. On this interface, the body portion 410 includes a GIS dashboard that is configured to display various real-time statistics associated with the sites, assets, maintenance operations, and/or service providers. The geographic location of each site 160 is identified by a marker 510. along with real-time site status information. The site status information indicates whether there are planned and/or ongoing maintenance operations at the sites 160, and whether there are any detected incidents at the sites 160 (e.g., as indicated by asset alert conditions 240). The service provider information and the type of maintenance request may be displayed on the GIS dashboard (e.g., in response to selecting a site 160 or options displayed on the interface).

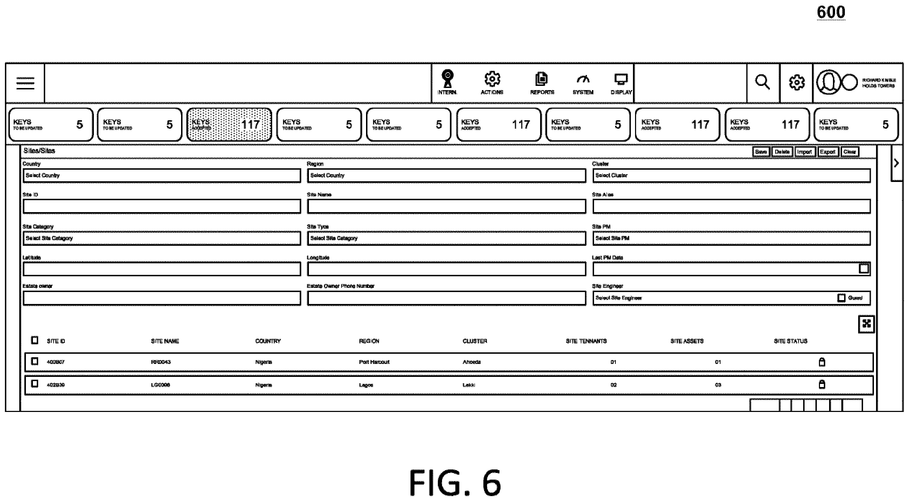

Figure 6 is an exemplary interface 600 that may be displayed by the access management system 150 according to certain embodiments. On the bottom of the body portion 410 of the interface, a list of sites 160 is displayed that the user or operator can browse. The user or operator can remove sites, edit site information, and add additional sites by entering appropriate data in the respective fields.

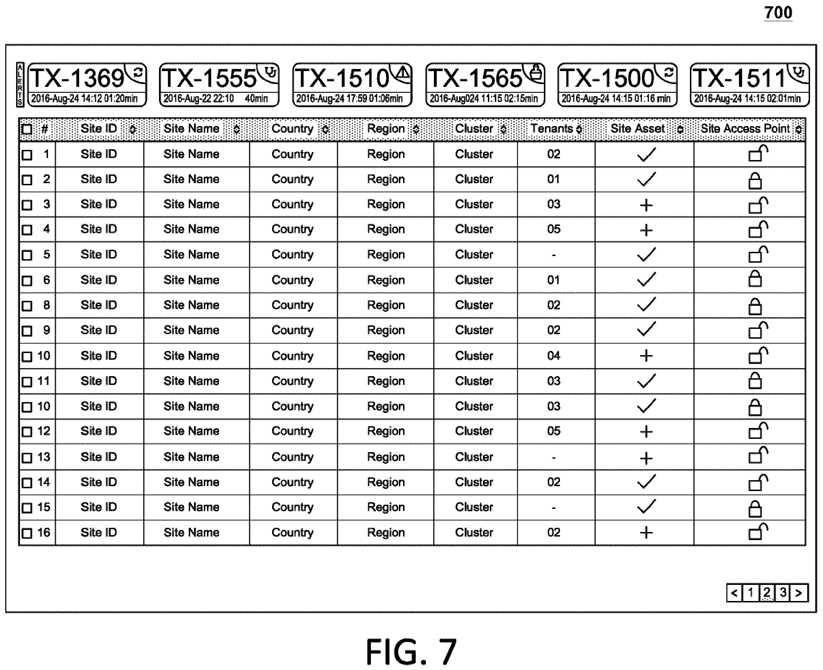

Figure 7 is an exemplary interface 700 that may be displayed by the access management system 150 according to certain embodiments. In certain embodiments, this interface may be displayed in the body portion 410 in response to selecting the Sites Option on the expandable menu.

The interface includes a table that lists each individual site 160 in a separate row. The table includes the following columns: a site ID column that lists an identifier (ID) associated with each site; a site name column that lists a name of each site; a country column indicating the country where each site is located; a region column indicating a region where each site is located; a cluster column indicating whether each site is associated with a site cluster (e.g., which may represent a group of sites in a particular geographic region); a tenants column indicating a number of tenants at each site; a site asset column that indicates whether the assets 190 at each site are currently locked (e.g., such as where a checkmark indicates that all assets are secured by a lock, and a plus sign indicates that one or more assets are not secured by locks); and a site access point column indicating whether or not one or more locks at each site are currently unlocked. This table provides a user with an overview of each site and whether the assets at each site are secured.

A user may select (e.g., by clicking, tapping, or hovering over) the information in the tenants column to view the names of the tenants at each site 160. A user may select the information in the assets column to view the listing of assets 190 located at each site 160. A user may select the information in the site access point column to view the listing of electronic locks 161 located at each site 160, and related information (e.g., lock names, lock IDs, previous access attempts, etc.).

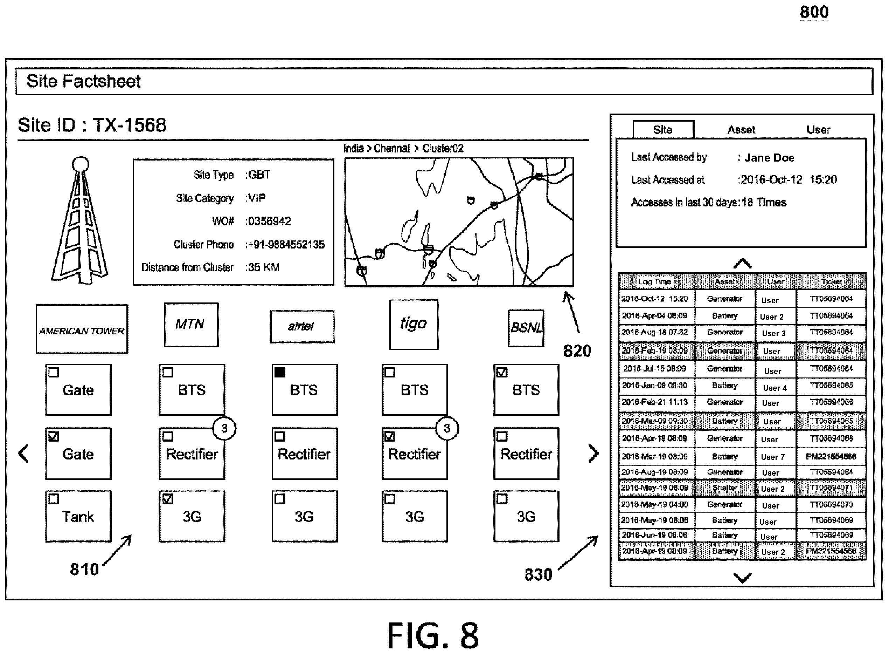

Figure 8 is an exemplary interface 800 that may be displayed by the access management system 150 according to certain embodiments. The interface displays a detailed summary of a particular site 160. In certain embodiments, this interface may be displayed in response to selecting one of the sites listed in the table of Figure 7.

The interface 800 includes an asset section 810, a map section 820, and a maintenance section 830. The asset section 810 lists the assets 190 located at the site 160. The assets listed in the asset section display the status (e.g., functioning, malfunctioning, failed, maintenance needed, etc.) of each asset, and can be selected to view detailed information relating to the assets 190. The map section 820 shows the geographic location of the site 160 on a map, and real-time locations of individuals (e.g., service providers and/or contractors) situated near the site 160. The maintenance section 830 displays information related to previous, ongoing, and upcoming maintenance operations. Each access attempt at the site is listed in the maintenance section 830. In this section, unauthorized accesses may be highlighted in different colors based on the severity level of the access attempt (e.g., such that different colors may be utilized to indicate theft, denied/unauthorized attempts, or granted access attempts).

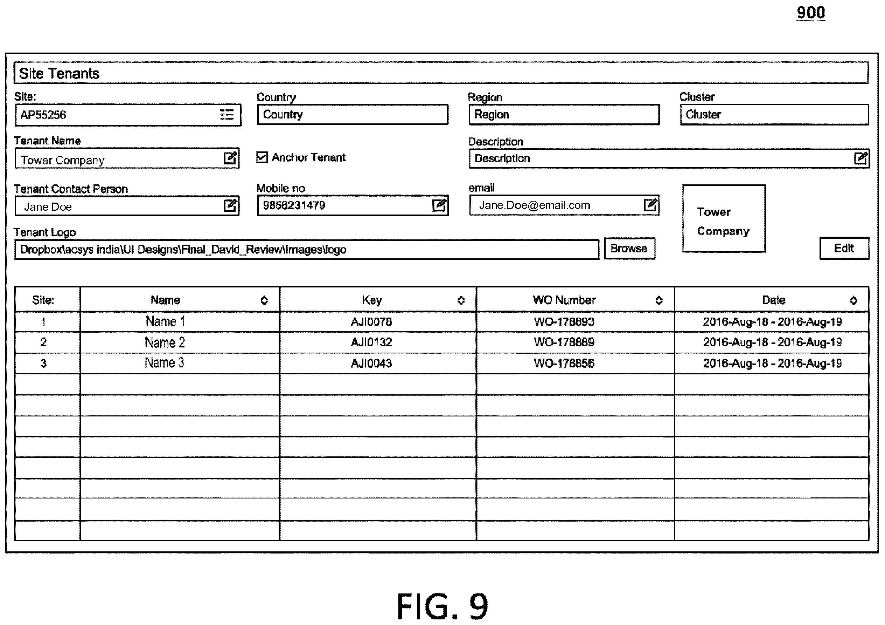

Figure 9 is an exemplary interface 900 that may be displayed by the access management system 150 according to certain embodiments. This interface enables a user to manage tenants and access permissions of the tenants at a site 160. For example, the interface enables a user to add, edit, remove, and/or assign tenants to a site 160. Detailed information (e.g., name, description, contact information, picture, access permissions, and associated programmable keys) can be specified and associated with each tenant.

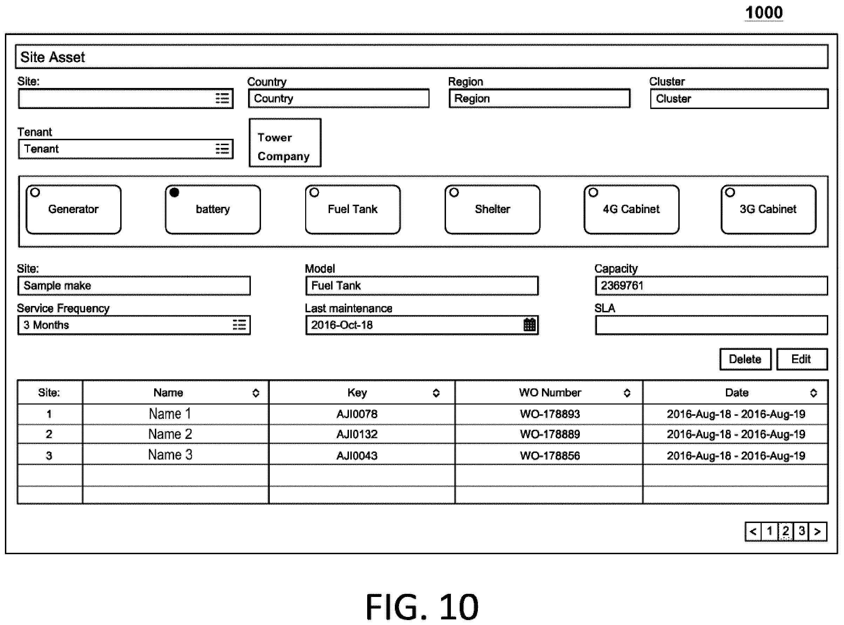

Figure 10 is an exemplary interface 1000 that may be displayed by the access management system 150 according to certain embodiments. The access management system can include an asset management system that is configured to specify, manage, and control each of the assets located at the sites 160. The interface 1000 may be displayed in connection with the functions performed by the asset management system.

The interface 1000 allows assets 190 to be added, edited, or removed from a site 160. The assets can be entered into the asset management system by specifying various details related to the assets 190 (e.g., sites where the assets are located, types of assets, geographic locations, IDs associated with the assets, etc.). After an asset 190 is defined, the access management system 150 is able to connect to the asset (e.g., using loT protocols or other protocols), thus synchronizing the asset with the access management system 150 and any integrated data generating systems 320. By accessing the interface 1000 associated with an asset 190, a user is able to view and track all maintenance requests associated with the assets as shown by the table at the bottom of the interface.

A user can use the interface 1000 to specify a service level agreement (SLA) for an asset, and the access management system 150 will automatically monitor the asset and determine if the SLA has been complied with. In certain embodiments, the asset management system also monitors the duration of each maintenance operation performed on each asset 190, and compiles a report determining the average maintenance time for each of the assets. This can permit the access management system 150 to perform a comparative analysis based on the make and model of each asset. The comparative analysis can be used to derive various determinations (e.g., indicating whether maintenance times and costs are reasonable, whether maintenance operations complied with specified SLAs, etc.).

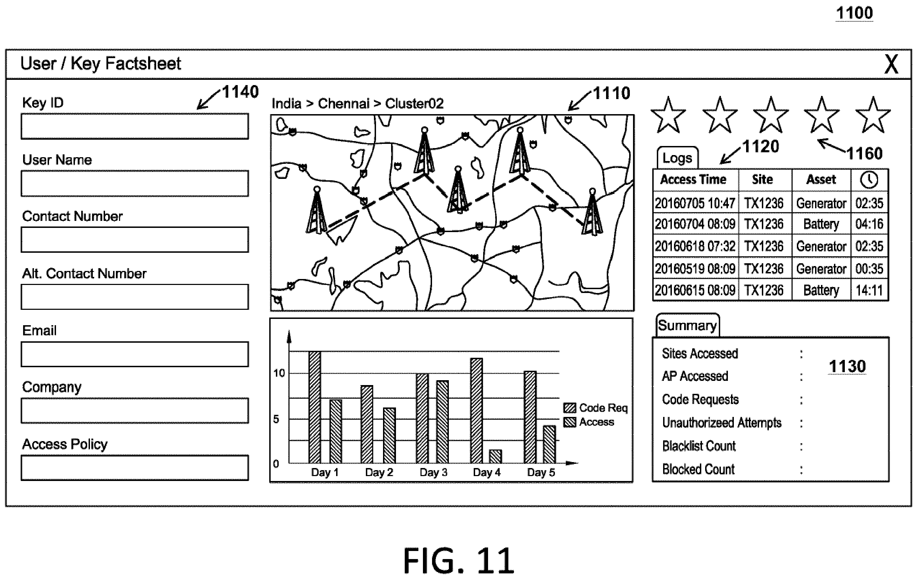

Figure 11 is an exemplary interface 1100 that may be displayed by the access management system 150 according to certain embodiments. This exemplary interface displays usage data associated with an electronic key 170 and the individual in possession of the electronic key 170. Similar interfaces can be displayed for any electronic key 170 that is utilized by the access management system and/or any individual in possession of an electronic key 170. These interfaces assist administrators and/or other platform users with identifying questionable behavior of the service providers or contractors in possession of the electronic keys 170, thereby increasing monitoring and security capabilities.

A map section 1110 of the interface displays a map identifying the sites where the electronic key 170 was used. A log section 1120 of the interface displays information pertaining to each access attempt associated with the electronic key 170. For example, the log section 1120 indicates the date and time of each access attempt, the site where each access attempt occurred, the asset(s) located at each site where the electronic key 170 was used, and the duration of each maintenance operation involving the electronic key 170. An information section 1140 of the website provides information about the electronic key 170 (e.g., key ID and access policy associated with the key) and information about the individual in possession of the electronic key 170 (e.g., the name of the individual, the company the individual is associated with, and contact information for the individual).

A summary section 1130 provides a summary of the statistics associated with the electronic key 170 and/or individual in possession of the electronic key 170. For example, the summary section 1130 may indicate the total number sites 160 the electronic key 170 attempted to access, the total number of electronic locks the electronic key 170 attempted to access, the total number of opening codes required by the individual in possession of the electronic key 170, the total number of blocked access attempts involving the electronic key 170, and the total number of times the electronic key 170 was blacklisted.

A ratings section 1160 of the interface indicates a rating for the individual in possession of the electronic key 170 (e.g., on scale of 1-5 stars). The rating may be based, at least in part, on a ratio of successful attempts to requests for opening codes. The rating of an individual may be decreased or negatively affected based on unauthorized access attempts or blocked access attempts, and/or as a result of being blacklisted.

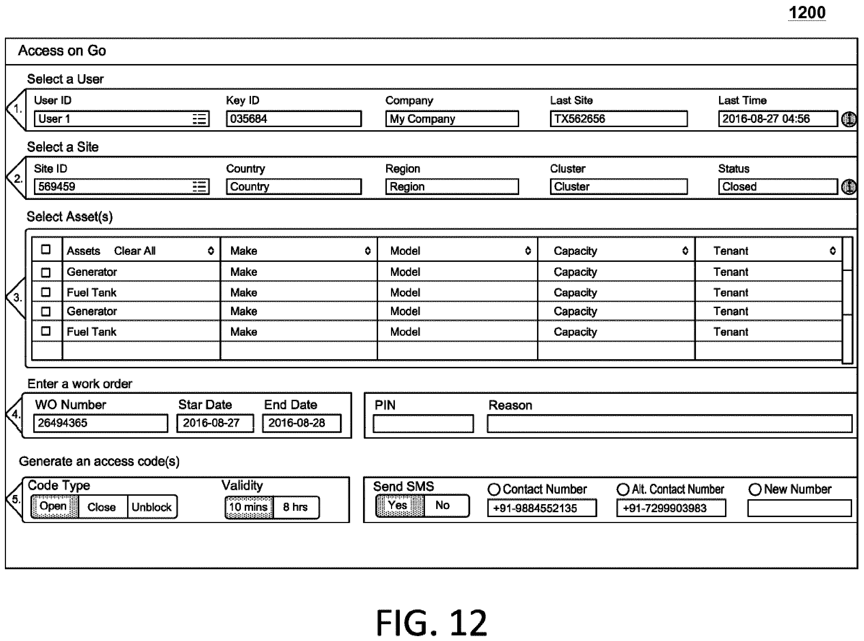

Figure 12 is an exemplary interface 1200 that may be displayed by the access management system 150 according to certain embodiments. This interface can be utilized to provide individuals (e.g., service providers, contractors, tenants, etc.) located remotely from a network operations center 110 with immediate access to sites 160 and/or assets 190. In certain embodiments, this interface can provide these individuals with CGS codes to access the sites 160 and/or assets 190.

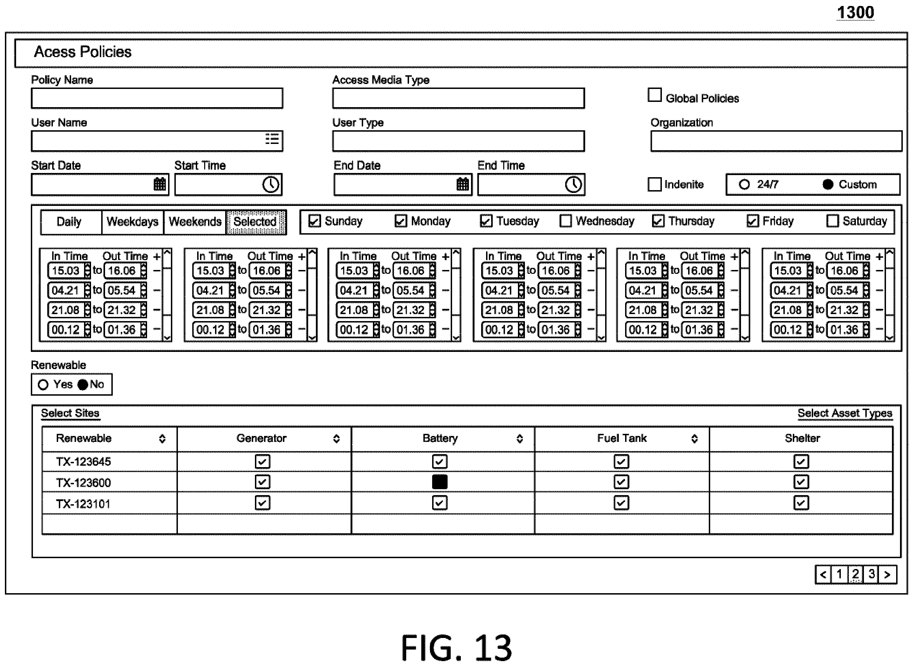

Figure 13 is an exemplary interface 1300 that may be displayed by the access management system 150 according to certain embodiments. This interface may enable administrators and/or other platform users to dynamically and remotely configure the access policies for electronic keys 170. The access policies can control whether the electronic keys 170 are able to unlock any of the electronic locks 161 that provide access to the sites 160 and/or assets 190. The administrators and/or other platform users can create and assign custom access policies for each of the electronic keys 170 and/or can assign access policy templates to the electronic keys 170.

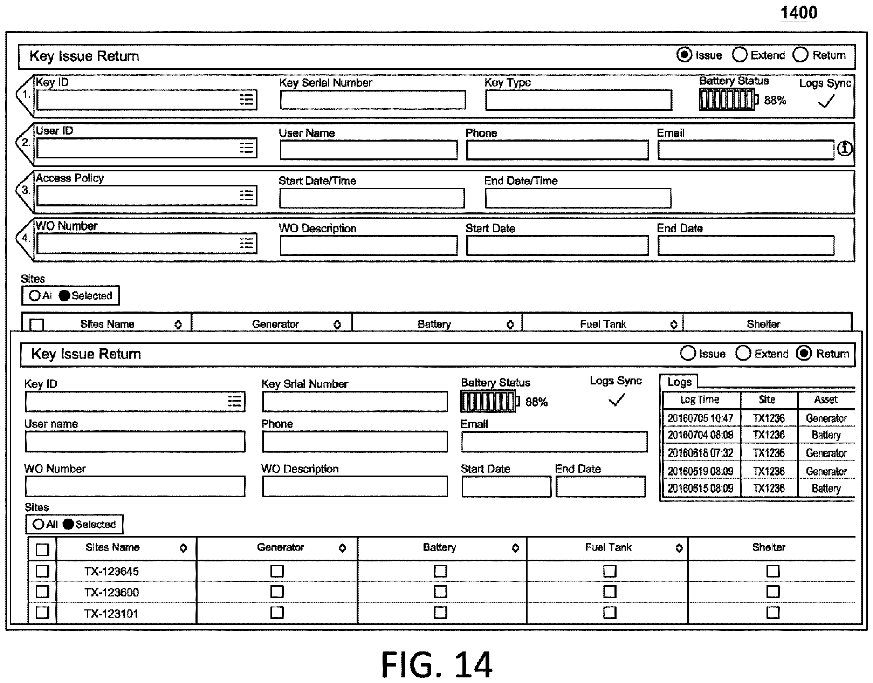

Figure 14 is an exemplary interface 1400 that may be displayed by the access management system 150 according to certain embodiments. In certain embodiments, the electronic keys 170 can be shared and reused among multiple individuals. The interface provides functions for facilitating the return of the electronic keys 170 by an individual and for redistributing the electronic keys 170 to new individuals.

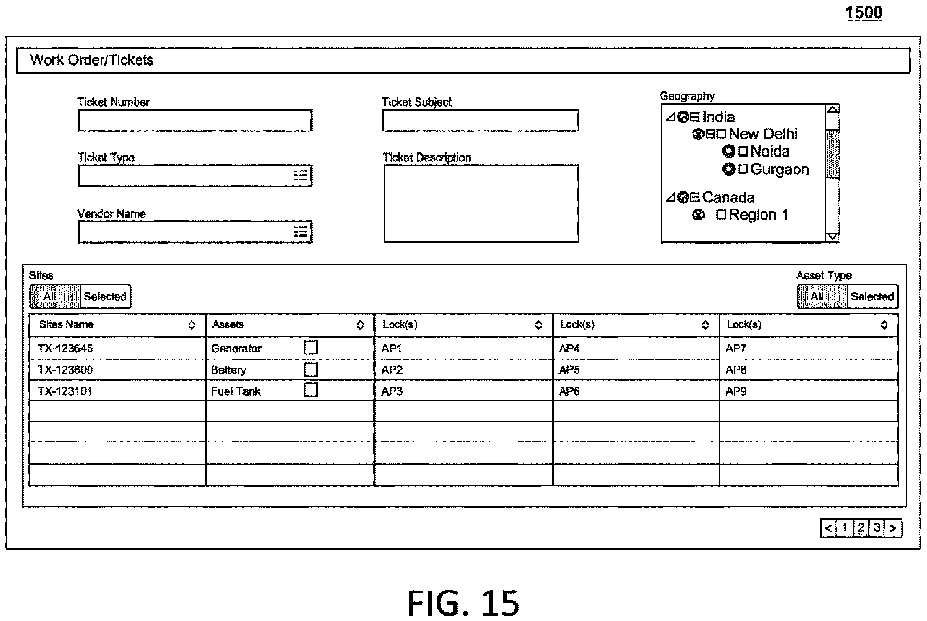

Figure 15 is an exemplary interface 1500 that may be displayed by the access management system 150 according to certain embodiments. As explained above, the access management system 150 can include a ticketing system 181 that collects maintenance information 211 and/or ticketing information 215, or may communicate with a third-party system 180 that collects this information. The interface 1500 can be provided in connection with a ticketing system 181 provided by the access management system 150. The interface 1500 enables an administrator and/or other platform user to create the tickets for each maintenance request and to link or associate the maintenance requests with particular electronic keys 170 and/or individuals in possession of the electronic keys 170. The interface permits the sites 160 and assets 190 associated with the maintenance requests to be selected.

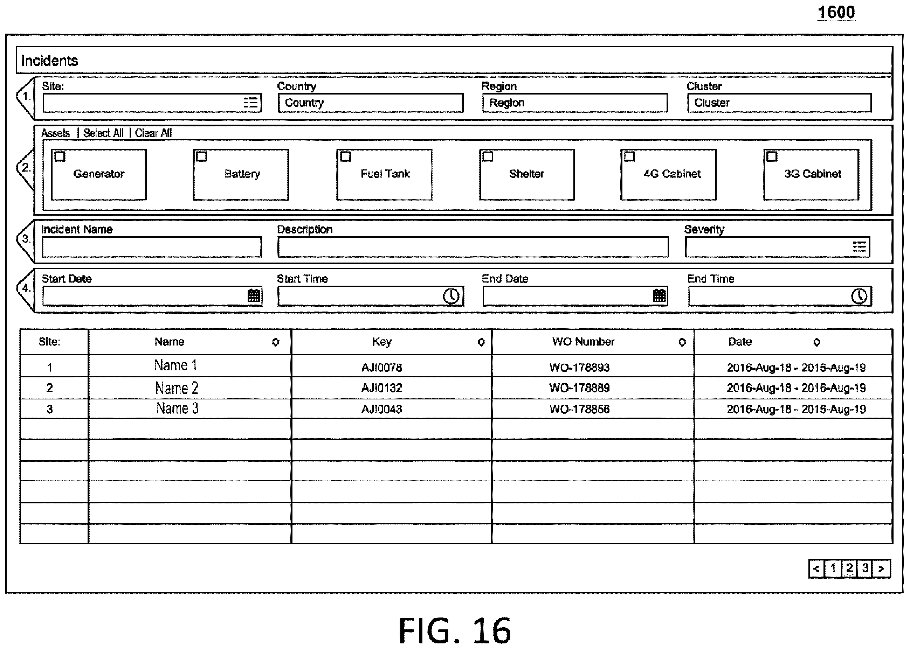

Figure 16 is an exemplary interface 1600 that may be displayed by the access management system 150 according to certain embodiments. This interface permits an administrator and/or other platform user to input incidents and/or asset alert conditions 240 that have occurred at the sites 160. Details can be input related to the causes of the incidents and/or asset alert conditions, and the manner in which the incidents and/or asset alert conditions were resolved. The data collected by this interface can assist the analytics component 250 with predicting future incidents and/or asset alert conditions 240.

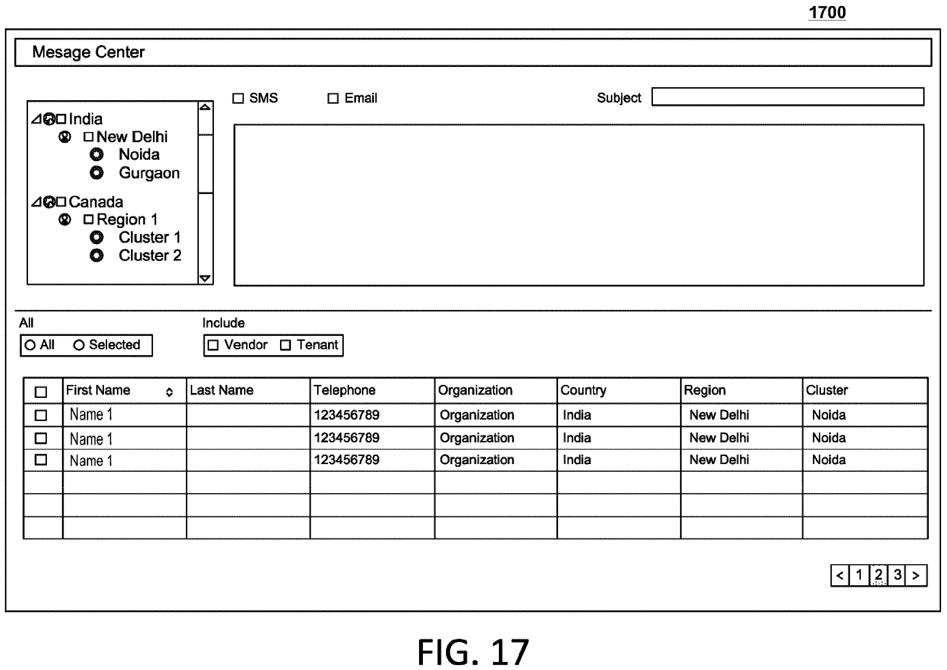

Figure 17 is an exemplary interface 1700 that may be displayed by the access management system 150 according to certain embodiments. This interface permits an administrator and/or other platform user to transmit messages to service providers, contractors, and/or other individuals. A message can be transmitted to a particular individual or can be broadcast to a plurality of individuals. The messages can be transmitted in various ways (e.g., text message, inbox message, e-mail, etc.).

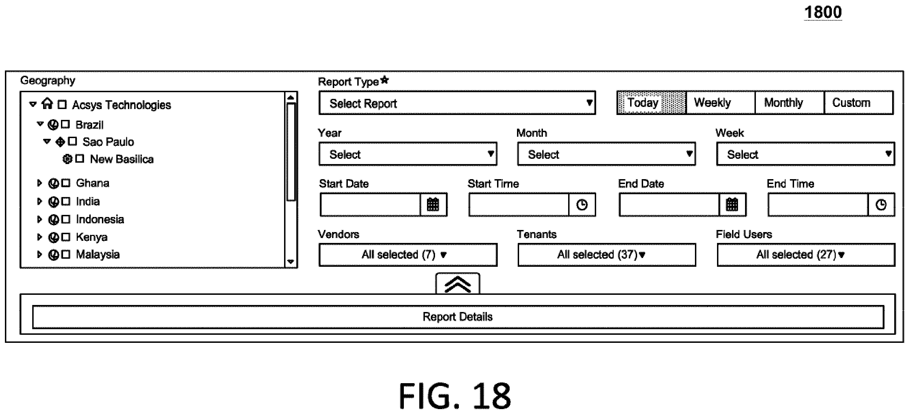

Figure 18 is an exemplary interface 1800 that may be displayed by the access management system 150 according to certain embodiments. The interface 1800 permits a user to generate a variety of customized reports. The user can create customized reports to be generated for specific geographic regions, sites 160, and assets 190. The user can specific various filtering criteria (e.g., based on location, dates/times, vendors, service providers, tenants, etc.) to customize the reports. Reports can be generated on demand and/or a user can schedule the automatic generation of reports for specific dates/times or at periodic intervals.

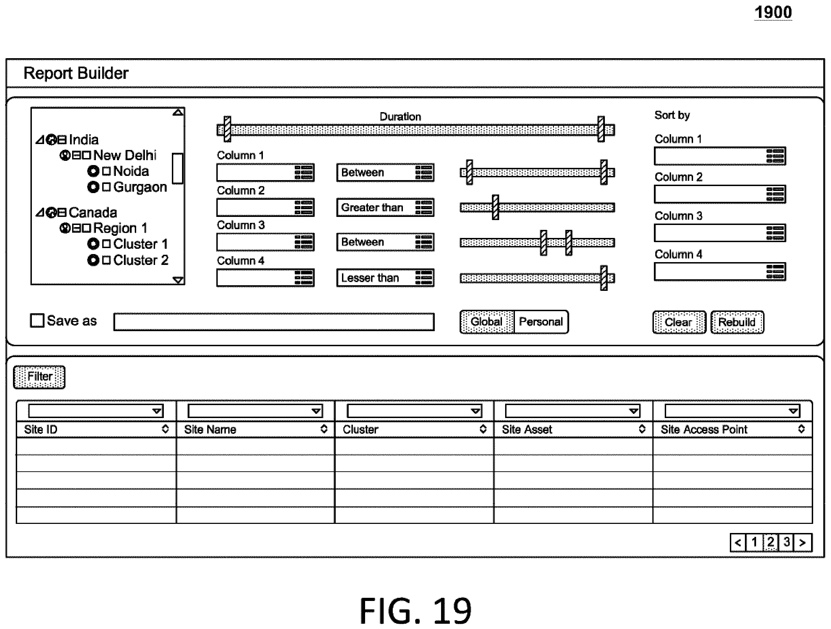

Figure 19 is an exemplary interface 1900 that may be displayed by the access management system 150 according to certain embodiments. This interface enables a user to customize a report generated by the access management system 150 (e.g., by reordering, sorting, deleting, adding, and/or filtering information included in the report). After the user has customized the report, the report can be used as a template to create additional reports in the future.

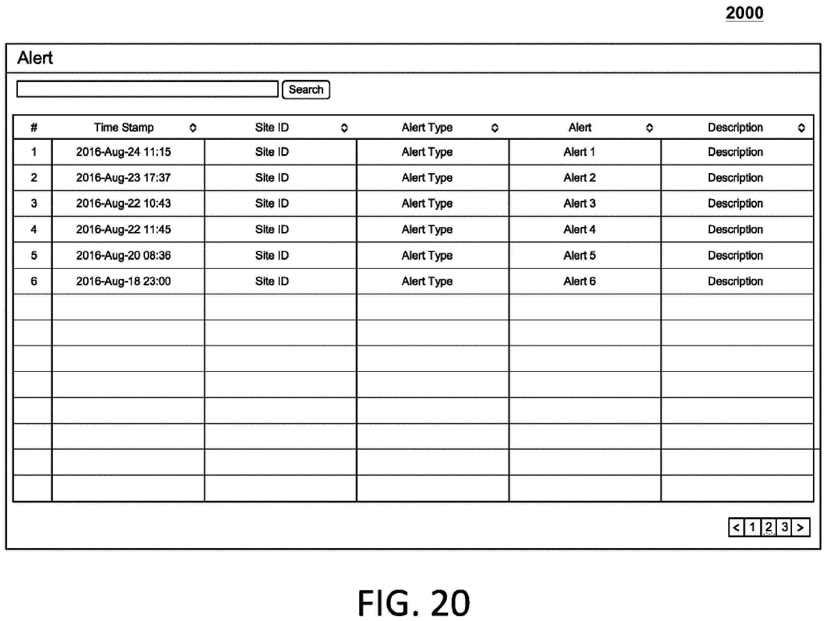

Figure 20 is an exemplary interface 2000 that may be displayed by the access management system 150 according to certain embodiments. This interface 2000 displays a listing of alerts 280. As explained above, the alerts 280 may correspond to asset alert conditions 240, maintenance events, security events, access control events, and other types of issues that arise at the sites 160. Each alert 280 may be displayed with a timestamp, site ID, alert type, description, and status.

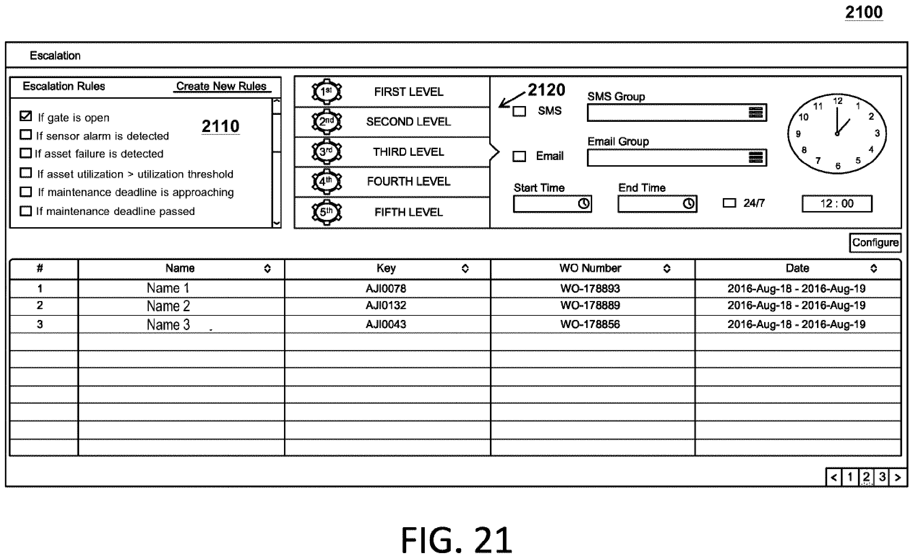

Figure 21 is an exemplary interface 2100 that may be displayed by the access management system 150 according to certain embodiments. The interface enables a user to escalate and de-escalate priorities associated with alerts 280. For example, each alert 280 generated by the access platform 150 may be assigned a priority indicating the urgency or importance of the alert 280. A user can manually change the priorities associated with the alerts 280. and/or the priorities associated with the alerts 280 can be automatically assigned and/or changed using escalation rules 2110 that can be customized by the user.

In certain embodiments, the access management system 150 can assign each alert 280 to one of a plurality of priority levels. For example, the exemplary interface 2100 includes a priority menu 2120 that enables each alert 280 to be assigned a priority level ranging from 1 to 5. In certain embodiments, priority level 1 may indicate the highest urgency or importance, with each subsequent priority level decreasing in urgency or importance and ending with priority level 5 (indicating a lowest level of urgency or importance). Any number of priority levels may be provided or utilized.

A user may utilize the interface 2100 to add, edit, or delete escalation rules 2110 that can be utilized to automatically assign priority levels to alerts 280. The escalation rules 2110 capable of being defined can vary greatly. For example, the escalation rules 2110 may correspond to any conditions, issues, and/or statuses associated with the sites, assets, and/or personnel (e.g., service providers). Exemplary escalation rules 2110 may assign priorities to alerts 280 based on one or more of the following conditions (or any combination thereof) being satisfied: (1) a determination that a gate, an asset 190, an electronic lock 161, or a site 160 is unlocked or unsecured; (2) a determination that a gate, an asset 190, an electronic lock 161, or a site 160 is locked or secured; (3) an alarm is detected (e.g., alarms generated by one or more cameras, camera systems, door sensors, motion sensors, perimeter detection sensors, and/or other sensors); (4) an asset alert condition 240 is detected indicating that one or more assets 190 have failed and/or are malfunctioning; (5) an asset alert condition 240 is detected indicating that one or more assets 190 are predicted to fail and/or malfunction; (6) a determination that an asset 190 and/or site 160 is not being properly maintenanced; (7) a determination that a maintenance deadline is approaching and/or has lapsed; (8) a determination that an asset 190 is being over-utilized; (9) a determination that an event (e.g., an opening of electronic lock 161) occurred during a particular timeframe/date; and/or (10) any other conditions. The escalation rules 2110 may assign priorities to alerts 280 based on any portion of the aggregated data 230 collected by the access management system 150 including, but not limited to, any of the data generated by the data generating systems 320.

The conditions associated with the escalation rules 2110 can be defined in various ways. For example, the conditions may be specified using if-else conditions (e.g., indicating an escalation rule 2110 is satisfied upon the satisfaction of a particular condition) and/or by applying logical operators (e.g., <, <=, =, >, >=) to certain values.

The user can also select options to specify dates and timeframes that are applicable to assigning priorities to the alerts 280. For example, the options may permit a user to specify that the priorities of certain alerts 280 should only be escalated or changed in the event that underlying events (e.g., alarms, unlocked or open gates, etc.) are detected within particular timeframes and/or dates. For example, an alert 280 indicating that a site or electronic lock 161 is unlocked may be assigned a lower priority level if the event is detected on a weekday during business hours, but may be assigned a higher priority level if the event is detected at night and/or on the weekend (e.g., which may indicate a possible break-in).

To illustrate by way of example, a user can specify that an alert 280 indicating that an asset 190 is malfunctioning or failed should be assigned a highest priority level. This may involve selecting an escalation rule 2110 corresponding to an asset failure/malfunction condition, and selecting the priority level 1 option in the priority menu 2120. The user can then select other options specifying individuals who are to receive the alert 280, as well as any timeframes/dates that apply to assigning the priority level to the alert 280. When a user is finished, the user can select the "Configure" option to apply the specified settings for assigning priorities to the alert 280.

As another example, a user can specify that an alert 280 indicating that an asset 190 is unlocked within a particular timeframe should be assigned to a particular priority level (e.g., priority level 2). This may involve selecting an escalation rule 2110 corresponding to an unlocked asset 190, selecting an option in the priority level menu 2120, and specifying appropriate timeframes/dates that apply. The user can then select options specifying individuals who are to receive the alert 280, and how the alert 280 is to be transmitted to these individuals (e.g., via text messages, e-mails, inbox messages, and/or other types of notifications). When a user is finished, the user can select the "Configure" option to apply the specified settings for assigning priorities to the alert 280.

It should be recognized that multiple escalation rules 2110 can be selected to cause the priority level of an alert to be escalated or changed. For example, if multiple escalation rules 2110 are selected, then the priority level of an alert 280 may only be escalated or changed if all conditions associated with the selected escalation rules 2110 are satisfied. This permits a user to customize the priorities assigned to alerts 280 in a granular manner.

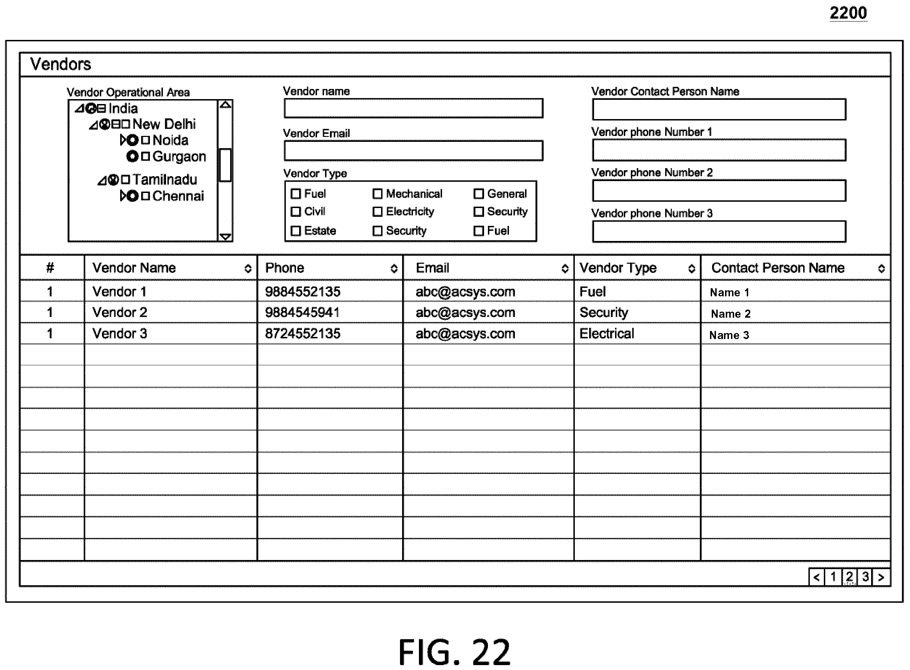

Figure 22 is an exemplary interface 2200 that may be displayed by the access management system 150 according to certain embodiments. This interface permits an administrator and/or other platform user to specify service providers (e.g., vendors, contractors, and engineers) that service the sites and/or assets, and to input details and settings associated with the service providers. For example, the interface allows for inputting service types (e.g., fuel, electrical, security, etc.) performed by the service providers, geographic areas where the service providers operate, contact information associated with the service providers, etc. Each service provider added is included in the listing at the bottom of the interface.

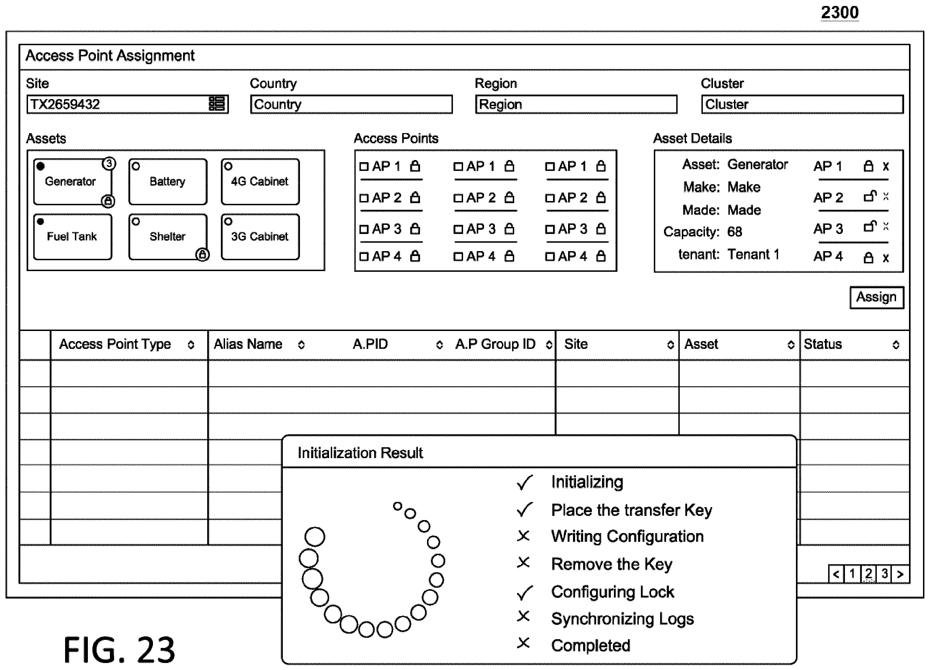

Figure 23 is an exemplary interface 2300 that may be displayed by the access management system 150 according to certain embodiments. The access management system 150 may provide various interfaces for adding new assets 190 to the access management system, initializing the assets 190, controlling the assets 190, and monitoring statuses and data associated with the assets 190. The interface 2300 is an exemplary interface for adding and initializing electronic locks 161 to the access management system. The interface enables electronic locks 161 to be associated with particular sites 160 and/or assets 190.

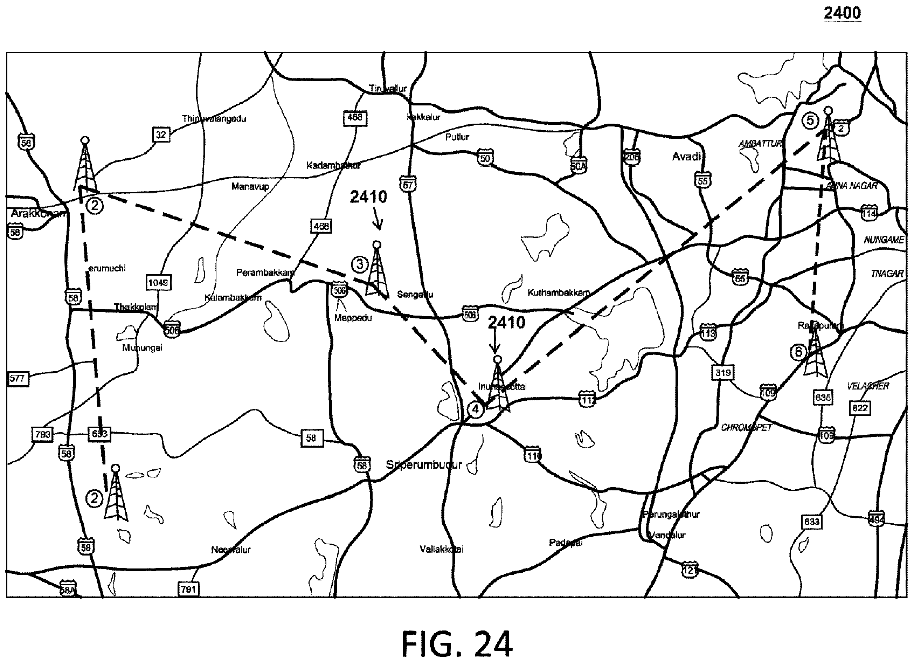

Figure 24 is an exemplary interface 2400 that may be displayed by the access management system 150 according to certain embodiments. The interface 2400 may be utilized to monitor locations and activities of service providers and/or other individuals associated with the access management system. The interface 2400 may also be utilized to assign service providers to maintenance operations at one or more sites 160 (e.g., in the event emergencies, incidents, and/or asset alert conditions are detected). Each of the sites 160 is identified by an icon 2410 on a map that identifies the geographic locations of the sites 160. The icons 2410 may be selected to view details about the site (e.g., site ID, number of electronic locks 161, number of unlocked electronic locks 161, etc.).

The icons 2410 may be displayed in different colors to indicate whether or not the corresponding sites require attention or servicing. For example, an icon 2410 for a site 160 may be displayed in red if one or more asset alert conditions 240 are detected at the site and/or if one or more electronic locks 161 are unlocked. On the other hand, an icon 2410 for a site 160 may be displayed in green if no asset alert conditions 240 are detected and/or if all electronic locks 161 are secured.

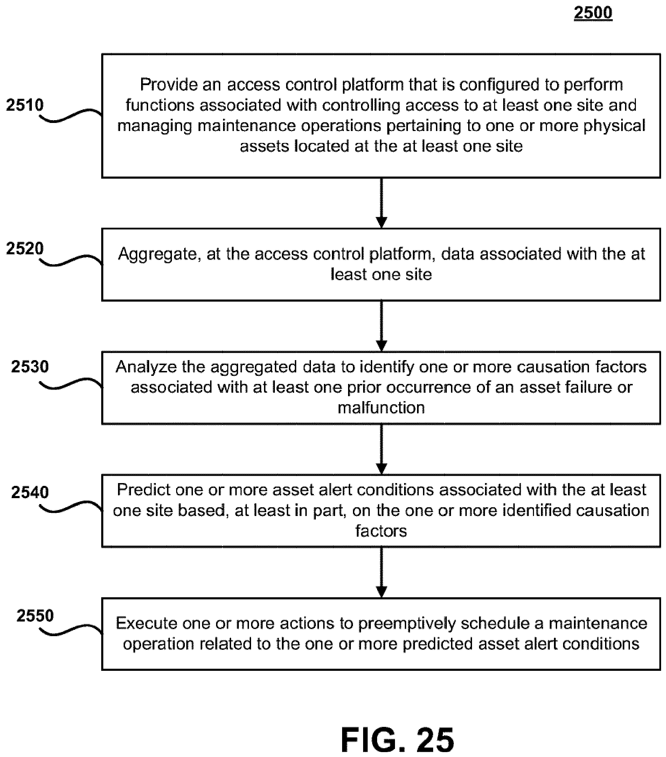

Figure 25 illustrates a flow chart for an exemplary method 2500 according to certain embodiments. Method 2500 is merely exemplary and is not limited to the embodiments presented herein. Method 2500 can be employed in many different embodiments or examples not specifically depicted or described herein. In some embodiments, the steps of method 2500 can be performed in the order presented. In other embodiments, the steps of method 2500 can be performed in any suitable order. In still other embodiments, one or more of the steps of method 2500 can be combined or skipped. In many embodiments, the access management system 150 can be suitable to perform method 2500 and/or one or more of the steps of method 2500. In these or other embodiments, one or more of the steps of method 2500 can be implemented as one or more computer instructions configured to run at one or more processing modules (e.g., processor 202) and configured to be stored at one or more memory storage modules which may be one or more non-transitory memory storage modules (e.g., storage device 201). Such memory storage modules can be part of a computer system such as access management system 150, system 100, and/or system 200.

In step 2510, an access management system 150 is provided that is configured to perform functions associated with controlling access to at least one site 160 and managing maintenance operations pertaining to one or more physical assets located at the at least one site. The sites 160 may correspond to locations operated, maintained, and/or associated with telecommunications service providers, fuel transportation providers, fuel distributors, power utility providers, warehouses, server farms, production facilities, fulfillment centers, and/or other entities. The assets may correspond to equipment 162 (e.g., generators, electrical sub-stations, phone towers, radio towers, fueling sources, fueling stations, manufacturing equipment, storage units, batteries, and/or other equipment), access control devices (e.g., electronic locks 161 and programmable keys 170), and computing devices (e.g., servers, remote site devices 140, desktop computers, smart phones, and tablets). The access management system can be configured to provide individuals with access to the sites 160 and to perform various functions associated with managing maintenance of the assets 190 associated with the sites 160.

In step 2520, aggregated data 230 associated with the at least one site is collected by the access management system 150. Exemplary aggregated data 230 may include product information 210, maintenance information 211, usage information 212, site information 213, access control information 214, ticketing information 215, RMS information 216, and third-party information (e.g., including ERP information, MRP information, weather information, and other information obtained from third-party systems). The aggregated data 230 may be stored in one or more databases associated with the access management system 150.

In step 2530, the aggregated data 311 is analyzed to identify one or more causation factors 260 associated with at least one prior occurrence of an asset failing or malfunctioning. The step may be performed by the analytics component 250 and/or other feature of the access management system 150. The one or more causation factors 260 relate to data points or determinations that indicate or predict the sources or causes of the at least one prior occurrence of an asset failing or malfunctioning. For example, the causation factors 260 may indicate that the prior asset alert conditions resulted, at least in part, from: an over-utilization of the assets (e.g., indicating the assets were utilized beyond a recommended threshold period of time and/or above a frequency threshold); a frequency of performing the maintenance operations on the assets (e.g., indicating that certain assets were not serviced within certain time periods); a geographic location of the assets or the at least one site (e.g., indicating that certain environmental conditions or other factors associated with the geographic location result in a higher volume of asset alert conditions); weather conditions (e.g., indicating the prior failure or malfunctioning occurred when certain weather conditions were present in the geographic locations of the sites 160); service providers who serviced the sites 160 and/or assets (e.g., indicating that certain service providers are correlated with increased occurrences of asset failures/malfunctions in comparison to other service providers); and/or other factors.

The analytics component 250 can analyze relatively large amounts of data across multiple sites related to prior asset alert incidents to derive causation factors and to establish corresponding thresholds for each causation factor. Each threshold may indicate an appropriate value (or range of values) for one or more data points corresponding to the prior site alert conditions. For example, the thresholds may indicate acceptable usage levels of equipment, how routinely sites or assets are to be serviced, whether certain assets are likely to fail or malfunction in particular geographic locations or in particular weather conditions, etc.

In step 2540, one or more asset alert conditions 240 associated with the at least one site are predicted based, at least in part, on the one or more identified causation factors. As mentioned above, access management system 150 may collect various data indicating the current statuses of the assets 190 (e.g., data indicating real-time or current usage levels of the assets, when the last maintenance of the assets occurred, current weather conditions in geographic locations of the assets, etc.). The data indicating the current statuses of the assets 190 may then be compared to the one or more causation factors to identify the asset alert conditions 240.

In step 2550, one or more actions are executed to preemptively schedule a maintenance operation related to the one or more predicted asset alert conditions. The one or more actions may include transmitting alerts or notifications to one or more individuals (e.g., service providers, vendors, contractors, maintenance personnel, engineers, site employees, property managers, and/or other individuals who service the sites). The alerts or notifications may notify the individuals of the predicted asset alert conditions, and may request that the individuals service the assets in order to avoid failures or malfunctioning of the assets 190. In certain embodiments, the access management system 150 may automatically identify one or more individuals who are located closest to the sites 160 where the asset alert conditions are detected to receive the alerts or notifications. This may be performed, at least in part, by monitoring the real-time locations of those individuals or devices (e.g., remote site devices 140, mobile devices, electronic keys 170, etc.) in possession of those individuals.

Access management systems and platforms have been described that are configured to perform functions associated with controlling access to remote sites and managing maintenance operations at the remote sites. The platform can aggregate data associated with the sites and/or assets located at the sites. The aggregated data can be analyzed to predict asset alert conditions indicating a potential failure or malfunctioning of the assets located at the remote sites. The platform can preemptively schedule maintenance operations to prevent failure or malfunctioning of the assets, and can provide individuals access to the sites to enable performance of the maintenance operations.

While various novel features of the invention have been shown, described and pointed out as applied to particular embodiments thereof, it should be understood that various omissions and substitutions and changes in the form and details of the systems and methods described and illustrated may be made by those skilled in the art without departing from the spirit of the invention. Amongst other things, the steps in the methods may be carried out in different orders in many cases where such may be appropriate. Those skilled in the art will recognize, based on the above disclosure and an understanding therefrom of the teachings of the invention, that the particular hardware and devices that are part of the system described herein, and the general functionality provided by and incorporated therein, may vary in different embodiments of the invention. Accordingly, the description of system components are for illustrative purposes to facilitate a full and complete understanding and appreciation of the various aspects and functionality of particular embodiments of the invention as realized in system and method embodiments thereof. Those skilled in the art will appreciate that the invention can be practiced in other than the described embodiments, which are presented for purposes of illustration and not limitation. Variations, modifications, and other implementations of what is described herein may occur to those of ordinary skill in the art without departing from the scope of the present invention.

## Claims

1. A method comprising:
providing an access management system that is configured to perform functions associated with controlling access to at least one site and managing maintenance operations pertaining to one or more physical assets located at the at least one site;
aggregating, at the access management system, data associated with the at least one site;
analyzing the aggregated data to identify one or more causation factors associated with at least one prior occurrence of an asset failure or malfunction;
predicting one or more asset alert conditions associated with the at least one site based, at least in part, on the one or more identified causation factors; and
executing one or more actions to preemptively schedule a maintenance operation related to the one or more predicted asset alert conditions.

2. The method of claim 1, wherein executing the one or more actions to preemptively schedule the maintenance operation includes:
transmitting, by the access management system, one or more alerts over a network to one or more individuals to perform the maintenance operation at the at least one site; and
granting, using the access management system, the one or more individuals with access to the at least one site.

3. The method of claim 1 or claim 2, wherein analyzing the aggregated data to identify the one or more causation factors includes using a machine learning algorithm, an artificial intelligence algorithm, or a trained neural network to identify a factor that is associated with increased occurrences of asset failures or asset malfunctions.

4. The method of any preceding claim, wherein the one or more identified causation factors are based, at least in part, on one or more of the following:
an over-utilization of the one or more physical assets located at the at least one site;
a frequency of performing maintenance operations on the one or more physical assets;
a geographic location of the one or more physical assets or the at least one site; and
a weather condition in the geographic location of the one or more physical assets or the at least one site.

5. The method of any preceding claim, wherein aggregating data associated with the at least one site includes aggregating one or more of:
maintenance data that is related to the maintenance operations that were previously performed on the one or more physical assets located at the at least one site;
usage data indicating an extent to which the one or more physical assets have been utilized; or
access control data associated with controlling access to the at least one site or the one or more physical assets located at the at least one site.

6. The method of any preceding claim, wherein:
aggregating data associated with the at least one site includes aggregating remote monitoring system (RMS) data associated with the one or more physical assets;
the RMS data at least includes historical power consumption data associated with the one or more physical assets and prior device failure incidents associated with the one or more physical assets;
the RMS data is utilized to identify the one or more causation factors;
the access management system is configured to monitor current or real-time RMS data for the one or more physical assets; and
the one or more asset alert conditions are predicted, at least in part, by comparing the current or real-time RMS data for the one or more physical assets with the one or more causation factors.

7. The method of any preceding claim, wherein:
aggregating data associated with the at least one site includes aggregating maintenance data or ticketing data associated with previous maintenance operations performed at the at least one site;
the maintenance data or ticketing data is utilized to identify the one or more causation factors;
the access management system is configured to monitor maintenance operations associated with servicing the one or more physical assets; and
the one or more asset alert conditions are predicted, at least in part, by comparing the monitored maintenance operations with the one or more causation factors.

8. The method of any preceding claim, wherein:
the at least one site is a telecommunications site, a fueling site, or a power utility site;
the one or more physical assets include at least one of: a phone tower, a radio tower, a fueling station, a generator, or an electrical sub-station; and
the one or more asset alert conditions correspond to: a predicted failure of the one or more physical assets, or a predicted malfunction of the one or more physical assets.

9. The method of any preceding claim, wherein the aggregated data is utilized to perform one or more benchmarking functions that are configured to assess maintenance operations that are performed at the at least one site.

10. The method of any preceding claim, wherein executing one or more actions to preemptively schedule the maintenance operation related to the one or more predicted asset alert conditions includes:
automatically identifying, by the access management system, a location of a nearest individual to the at least one site where the one or more predicted asset alert conditions are detected; and
transmitting an alert to the individual to preemptively perform the maintenance operation.

11. An access management system, comprising:
one or more computing devices comprising one or more processors and one or more storage devices for storing instructions, wherein execution of the instructions by the one or more processors causes the one or more computing devices to perform the method of any preceding claim.

12. A computer readable medium comprising instructions which, when executed by one or more processors of one or more computing devices of an access management system, cause the one or more computing devices to perform the method of any of claims 1 to 10.

13. A computer program comprising instructions which, when executed by one or more processors of one or more computing devices of an access management system, cause the one or more computing devices to perform the method of any of claims 1 to 10.
